(19) Europäisches Patentamt
European Patent Office
Office européen des brevets

(11) EP 3 533 800 A1

(12) EUROPEAN PATENT APPLICATION
published in accordance with Art. 153(4) EPC

(43) Date of publication:
**04.09.2019 Bulletin 2019/36**

(21) Application number: **17864701.2**

(22) Date of filing: **25.10.2017**

(51) Int Cl.:
***C07F 9/09*** *(2006.01)* ***C07F 9/6574*** *(2006.01)*
***C08K 5/521*** *(2006.01)* ***C08L 23/00*** *(2006.01)*

(86) International application number:
**PCT/JP2017/038567**

(87) International publication number:
**WO 2018/079621 (03.05.2018 Gazette 2018/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.10.2016 JP 2016209870**

(71) Applicant: **Adeka Corporation**
**Tokyo 116-0012 (JP)**

(72) Inventors:
- **MIZUSHIMA, Hiroaki**
**Saitama-shi**
**Saitama 336-0022 (JP)**
- **HORIKOSHI, Takahiro**
**Saitama-shi**
**Saitama 336-0022 (JP)**

(74) Representative: **Gill Jennings & Every LLP**
**The Broadgate Tower**
**20 Primrose Street**
**London EC2A 2ES (GB)**

# (54) NOVEL COMPOUND, COMPOSITION INCLUDING SAME, OLEFIN-BASED RESIN COMPOSITION, MOLDED ARTICLE THEREOF, AND METHOD FOR IMPROVING IMPACT RESISTANCE OF MOLDED ARTICLE

(57) Provided are: a novel compound capable of yielding a molded article of a resin composition, which molded article exhibits excellent impact resistance and has low shrinkage anisotropy; a composition containing the same; an olefin-based resin composition; a molded article thereof; and a method of improving the impact resistance of a molded article. The novel compound is a compound (A) represented by the following Formula (1), where $R^1$ to $R^6$ each independently represent a hydrogen atom, a halogen atom, or the like; $R^1$ and $R^6$ are optionally linked together to form a methylene bridge; $R^2$ and $R^3$, and/or $R^4$ and $R^5$ are optionally linked together to form a fused ring with a benzene ring; at least one of $R^1$ to $R^6$ represents a halogen atom or a cycloalkyl group, or forms a fused ring; a represents 1 to 3; and $M^1$ represents a hydrogen atom, sodium, lithium, an alkaline earth metal atom, a transition metal atom, a base metal atom, a polyvalent metal inorganic group, an ammonium group, a sulfonium group, or a lanthanoid:

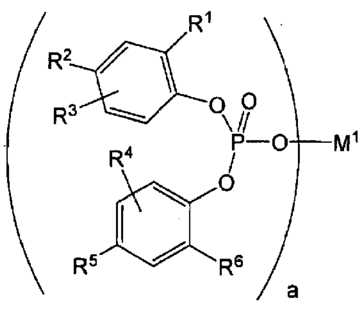

(1)

EP 3 533 800 A1

**Description**

TECHNICAL FIELD

The present invention relates to: a novel compound; a composition containing the same; an olefin-based resin composition; a molded article thereof; and a method of improving the impact resistance of a molded article. More particularly, the present invention relates to: a novel compound capable of yielding a molded article of a resin composition, which molded article exhibits excellent impact resistance and has low shrinkage anisotropy; a composition containing the same; an olefin-based resin composition; a molded article thereof; and a method of improving the impact resistance of a molded article.

BACKGROUND ART

Olefin-based resins, such as polyethylene, polypropylene and polybutene-1, are advantageous because of their excellent moldability, heat resistance, electrical characteristics, mechanical properties, low specific gravity and the like and are, therefore, utilized in a wide variety of fields as materials for film forming, sheet forming, blow molding, injection molding and the like. However, olefin-based resins have problems in that, for example, they have a slow crystallization rate after being heat-molded and require a long molding cycle in processing. In addition, their molded articles are sometimes deformed due to crystallization that progresses even after molding.

It is known that these drawbacks are all attributed to the crystallinity of the olefin-based resins and can be overcome by allowing rapid generation of fine crystals. Accordingly, in order to achieve rapid generation of fine crystals, for example, a method of adding a nucleating agent, a crystallization accelerator or the like is employed.

As the nucleating agent and the crystallization accelerator, for example, carboxylates, such as sodium benzoate, aluminum 4-*tert*-butylbenzoate, sodium adipate and 2-sodium-bicyclo[2.2.1]heptane-2,3-dicarboxylate; metal phosphates, such as sodium-bis(4-*tert*-butylphenyl)phosphate, sodium-2,2'-methylene-bis(4,6-di-*tert*-butylphenyl)phosphate and lithium-2,2'-methylene-bis(4,6-di-*tert*-butylphenyl)phosphate; and compounds having an acetal skeleton, such as dibenzylidene sorbitol, bis(methylbenzylidene)sorbitol and bis(dimethylbenzylidene)sorbitol, are known.

Particularly, metal phosphate-based nucleating agents are known as nucleating agents capable of imparting olefin-based resins with excellent rigidity. However, olefin-based resin compositions in which a metal phosphate is incorporated have been indicated to have problems of a reduction in impact resistance and an increase in shrinkage anisotropy.

Examples of a method of improving the impact resistance include a method of modifying a polyolefin resin and, for example, it is known to mix a propylene block copolymer obtained by allowing a propylene homopolymer to generate an $\alpha$-olefin copolymer, a propylene homopolymer, and an ethylene-$\alpha$-olefin copolymer. Further, methods of modifying a polyolefin resin by alloying it with a rubber component and an additive(s) such as an inorganic filler are proposed in Patent Documents 1 and 2, and a method of incorporating a $\beta$-crystal nucleating agent is proposed in Patent Document 3. In Patent Document 4, it is shown that molded articles which contain sodium-2,2'-methylene-bis(4,6-di-*tert*-butylphenyl)phosphate having a particle size distribution constituted by 92% by volume of particles having a size of 60 $\mu$m or smaller and 70% by volume of particles having a size of 25 $\mu$m or smaller exhibit excellent Du Pont impact strength (-20°C).

Meanwhile, as for an improvement in anisotropy, Patent Documents 5, 6, 7 and 8 propose a resin composition in which a metal phosphate and talc are used in combination, a resin composition in which a metal phosphate and a carbon fiber are used in combination, a resin composition in which two kinds of nucleators based on a metal dicarboxylate and a metal phosphate are used in combination, and a resin composition in which a dibenzylidene sorbitol compound is incorporated, respectively. Further, in Patent Document 9, it is proposed to produce a low-anisotropy PET bottle cap by molding a resin composition containing a metal dicarboxylate.

RELATED ART DOCUMENTS

PATENT DOCUMENTS

[Patent Document 1] JP2012-144671A
[Patent Document 2] JP2004-204198A
[Patent Document 3] JP2014-012395A
[Patent Document 4] JPH03-009939A
[Patent Document 5] JP2002-220501A
[Patent Document 6] JP2006-225467A

[Patent Document 7] JP2008-516069A
[Patent Document 8] JP2010-248438A
[Patent Document 9] JP2012-229355A

## SUMMARY OF THE INVENTION

### PROBLEMS TO BE SOLVED BY THE INVENTION

However, in those methods of modifying a polyolefin resin into an ethylene-propylene block copolymer or alloying a polyolefin resin with a rubber component, the compatibility with additives may be reduced and the physical properties, such as rigidity and heat resistance, may be deteriorated. Moreover, the improvement effect provided by a conventional $\beta$-crystal nucleating agent or phosphate compound is not satisfactory. Under such circumstances, a resin composition having excellent impact resistance and low anisotropy is demanded today.

In view of the above, an object of the present invention is to provide: a novel compound capable of yielding a molded article of a resin composition, which molded article exhibits excellent impact resistance and has low shrinkage anisotropy; a composition containing the same; an olefin-based resin composition; a molded article thereof; and a method of improving the impact resistance of a molded article.

### MEANS FOR SOLVING THE PROBLEMS

The present inventors intensively studied to solve the above-described problems and consequently discovered that the problems can be solved by a phosphoric acid ester compound having a specific structure, thereby completing the present invention.

That is, the compound of the present invention is a compound (A) characterized by being represented by the following Formula (1):

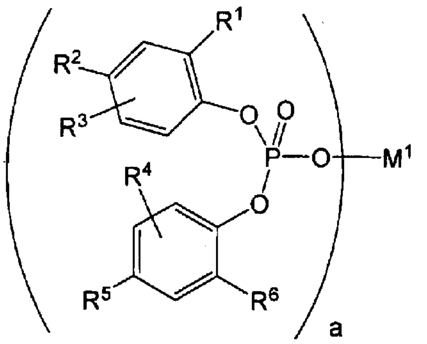

(1)

,

where $R^1$ to $R^6$ each independently represent a hydrogen atom, a halogen atom, an alkyl group having 1 to 10 carbon atoms, or a cycloalkyl group having 3 to 20 carbon atoms; $R^1$ and $R^6$ are optionally linked together to form a methylene bridge; $R^2$ and $R^3$ and/or $R^4$ and $R^5$ are optionally linked together to form a fused ring with a benzene ring; at least one of $R^1$ to $R^6$ represents a halogen atom or a cycloalkyl group, or forms a fused ring; a represents 1 to 3; and $M^1$ represents a hydrogen atom, sodium, lithium, an alkaline earth metal atom, a transition metal atom, a base metal atom, a polyvalent metal inorganic group, an ammonium group, a sulfonium group, or a lanthanoid.

The compound of the present invention is preferably a compound represented by the following Formula (2):

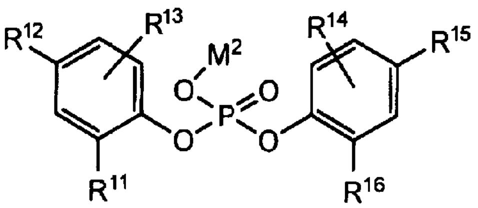

(2)

,

where $M^2$ represents a hydrogen atom, sodium, or lithium; $R^{11}$ to $R^{16}$ each independently represent a hydrogen atom, a halogen atom, an alkyl group having 1 to 10 carbon atoms, or a cycloalkyl group having 3 to 20 carbon atoms; $R^{11}$

and $R^{16}$ are optionally linked together to form a methylene bridge; $R^{12}$ and $R^{13}$ and/or $R^{14}$ and $R^{15}$ are optionally linked together to form a fused ring with a benzene ring; and at least one of $R^{11}$ to $R^{16}$ represents a halogen atom or a cycloalkyl group, or forms a fused ring,

a compound represented by the following Formula (3):

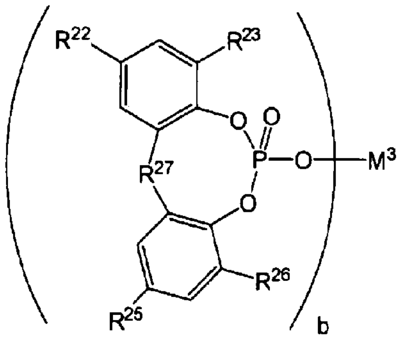

(3)

,

where $R^{22}$, $R^{23}$, $R^{25}$ and $R^{26}$ each independently represent a hydrogen atom, a halogen atom, or a cycloalkyl group having 3 to 20 carbon atoms; $R^{27}$ represents methylene or 1-methylmethylene; at least one of $R^{22}$, $R^{23}$, $R^{25}$ and $R^{26}$ represents a halogen atom or a cycloalkyl group; b represents 1 or 2; $M^3$ represents a hydrogen atom, sodium, lithium, an alkaline earth metal atom, a transition metal atom, a base metal atom, a polyvalent metal inorganic group, an ammonium group, a sulfonium group, or a lanthanoid, or

a compound represented by the above-described Formula (1), wherein $R^1$ and $R^6$ are linked together to form a methylene bridge, and $R^3$ and $R^4$ are both 1-methylcyclohexyl.

A composition of the present invention is characterized by containing the compound of the present invention.

It is preferred that the composition of the present invention further contains (B) a fatty acid metal salt represented by the following Formula (4):

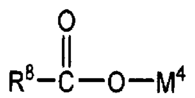

(4)

,

where $R^8$ represents a group introduced from an aliphatic organic acid having 10 to 30 carbon atoms; and $M^4$ represents an alkali metal atom.

In the composition of the present invention, it is preferred that a ratio of the (A) compound represented by the Formula (1) and the (B) fatty acid metal salt represented by the Formula (4), (A)/(B), be 9/1 to 1/9 in terms of mass ratio.

The olefin-based resin composition of the present invention is characterized by containing the composition of the present invention such that the content of the (A) compound represented by the Formula (1) is 0.001 to 20 parts by mass with respect to 100 parts by mass of an olefin-based resin.

A molded article of the present invention is characterized by containing the olefin-based resin composition of the present invention.

A method of improving the impact resistance of an olefin resin-containing molded article according to the present invention is characterized by using (A) a compound represented by the following Formula (1) for improving the impact resistance of the olefin resin-containing molded article:

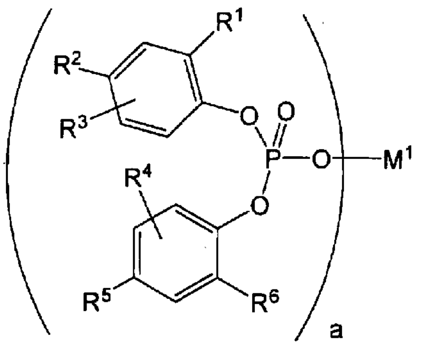

(1)

,

where $R^1$ to $R^6$ each independently represent a hydrogen atom, a halogen atom, an alkyl group having 1 to 10 carbon atoms, or a cycloalkyl group having 3 to 20 carbon atoms; $R^1$ and $R^6$ are optionally linked together to form a methylene bridge; $R^2$ and $R^3$ and/or $R^4$ and $R^5$ are optionally linked together to form a fused ring with a benzene ring; at least one of $R^1$ to $R^6$ represents a halogen atom or a cycloalkyl group, or forms a fused ring; a represents 1 to 3; and $M^1$ represents a hydrogen atom, sodium, lithium, an alkaline earth metal atom, a transition metal atom, a base metal atom, a polyvalent metal inorganic group, an ammonium group, a sulfonium group, or a lanthanoid.

EFFECTS OF THE INVENTION

According to the present invention, a novel compound capable of yielding a molded article of a resin composition, which molded article exhibits excellent impact resistance and has low shrinkage anisotropy; a composition containing the same; an olefin-based resin composition; a molded article thereof; and a method of improving the impact resistance of a molded article can be provided.

MODE FOR CARRYING OUT THE INVENTION

Embodiments of the present invention will now be described in detail. The compound of the present invention is (A) a compound represented by the following Formula (1) (hereinafter, also referred to as "compound (A)") and can be used for improving the impact resistance of an olefin resin-containing molded article:

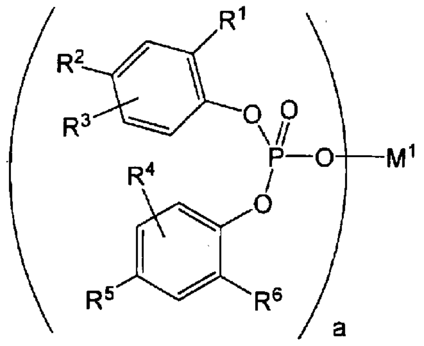

(1)

In the Formula (1), $R^1$ to $R^6$ each independently represent a hydrogen atom, a halogen atom, an alkyl group having 1 to 10 carbon atoms, or a cycloalkyl group having 3 to 20 carbon atoms; $R^1$ and $R^6$ are optionally linked together to form a methylene bridge; $R^2$ and $R^3$ and/or $R^4$ and $R^5$ are optionally linked together to form a fused ring with a benzene ring; at least one of $R^1$ to $R^6$ represents a halogen atom or a cycloalkyl group, or forms a fused ring; a represents 1 to 3; and $M^1$ represents a hydrogen atom, sodium, lithium, an alkaline earth metal atom, a transition metal atom, a base metal atom, a polyvalent metal inorganic group, an ammonium group, a sulfonium group, or a lanthanoid.

Examples of the halogen atom represented by $R^1$ to $R^6$ in the Formula (1) include fluorine, chlorine, bromine and iodine and, in the compound (A) of the present invention, chlorine is particularly preferred.

Examples of the alkyl group having 1 to 10 carbon atoms that is represented by $R^1$ to $R^6$ in the Formula (1) include methyl, ethyl, propyl, isopropyl, butyl, *sec*-butyl, *tert*-butyl, isobutyl, amyl, *tert*-amyl, hexyl, heptyl, octyl, isooctyl, *tert*-octyl, 2-ethylhexyl, nonyl, isononyl, and decyl. Some of the hydrogen atoms in these alkyl groups may each be substituted with a halogen atom.

Examples of the cycloalkyl group having 3 to 20 carbon atoms that is represented by $R^1$ to $R^6$ in the Formula

(1) include cyclopropyl, cycloheptyl, cyclohexyl, 1-methylcyclohexyl, 2-methylcyclohexyl, 3-methylcyclohexyl, 4-methylcyclohexyl, cyclopentyl, cyclooctyl, and 2,4-dimethylcyclohexyl. Some of the hydrogen atoms in these cycloalkyl groups may each be substituted with an alkyl group or a halogen atom.

Examples of the fused ring with a benzene ring formed by linking of $R^2$ and $R^3$ and/or $R^4$ and $R^5$ in the Formula (1) include naphthalene, anthracene, phenanthrene, 2,3-dihydro-1*H*-indene, 1,2,3,4-tetrahydronaphthalene, 9,10-dihydroanthracene, bicyclo[4.1.0]hepta-1,3,5-triene, bicyclo[4.2.0]octa-1,3,5-triene, 2,3-dihydro-1*H*-indene, naphthalene, 1,2,3,4-tetrahydronaphthalene, 6,7,8,9-tetrahydro-5*H*-benzo[7]annulene, and 5,6,7,8,9,10-hexahydrobenzo[8]annulene. Some of the hydrogen atoms in the fused ring may each be substituted with an alkyl group or a halogen atom.

Examples of the alkaline earth metal atom represented by $M^1$ in the Formula (1) include calcium, strontium, barium, and radium. In the compound (A) of the present invention, calcium and barium can be preferably used.

Examples of the transition metal atom represented by $M^1$ in the Formula (1) include scandium, titanium, vanadium, chromium, manganese, iron, cobalt, nickel, copper, yttrium, zirconium, niobium, molybdenum, technetium, ruthenium, rhodium, palladium, silver, hafnium, tantalum, tungsten, rhenium, osmium, iridium, platinum, and gold. In the compound (A) of the present invention, copper and zirconium are preferred since the effects of the present invention are attained prominently.

Examples of the base metal atom represented by $M^1$ in the Formula (1) include iron, copper, aluminum, lead, zinc, tin, tungsten, indium, molybdenum, chromium, germanium, tantalum, magnesium, cobalt, cadmium, titanium, zirconium, vanadium, gallium, antimony, manganese, nickel, beryllium, hafnium, niobium, bismuth, rhenium, and thallium. In the compound (A) of the present invention, copper, aluminum, zinc and magnesium are preferably used since they can be produced inexpensively.

The "polyvalent metal inorganic group" represented by $M^1$ in the Formula (1) refers to an oxide, hydroxide or carbonate of a divalent to tetravalent metal. Specific examples of the polyvalent metal include calcium, magnesium, manganese, copper, zinc, aluminum, chromium, gallium, silicon, and zirconium. In the compound (A) of the present invention, zirconium is preferably used.

Examples of the ammonium group represented by $M^1$ in the Formula (1) include ammonium; trialkylammoniums, such as trimethylammonium, triethylammonium, tripropylammonium, and tributylammonium; *N*,*N*-dialkylaniliniums, such as *N*,*N*-dimethylanilinium, *N*,*N*-diethylanilinium, and *N*,*N*-2,4,6-pentamethylanilinium; and dialkylammoniums, such as di(isopropyl)ammonium and dicyclohexylammonium.

Examples of the sulfonium group represented by $M^1$ in the Formula (1) include triphenylsulfonium, (4-*tert*-butylphenyl)diphenylsulfonium, bis(4-*tert*-butylphenyl)phenylsulfonium, tris(4-*tert*-butylphenyl)sulfonium, (3-*tert*-butylphenyl)diphenylsulfonium, bis(3-*tert*-butylphenyl)phenylsulfonium, tris(3-*tert*-butylphenyl)sulfonium, (3,4-di-*tert*-butylphenyl)diphenylsulfonium, bis(3,4-di-*tert*-butylphenyl)phenylsulfonium, tris(3,4-di-*tert*-butylphenyl)sulfonium, (4-*tert*-butoxyphenyl)diphenylsulfonium, bis(4-*tert*-butoxyphenyl)phenylsulfonium, tris(4-*tert*-butoxyphenyl)sulfonium, (3-*tert*-butoxyphenyl)diphenylsulfonium, bis(3-*tert*-butoxyphenyl)phenylsulfonium, tris(3-*tert*-butoxyphenyl)sulfonium, (3,4-di-*tert*-butoxyphenyl)diphenylsulfonium, bis(3,4-di-*tert*-butoxyphenyl)phenylsulfonium, tris(3,4-di-*tert*-butoxyphenyl)sulfonium, diphenyl(4-thiophenoxyphenyl)sulfonium, (4-*tert*-butoxycarbonylmethyloxyphenyl)diphenylsulfonium, tris(4-*tert*-butoxycarbonylmethyloxyphenyl)diphenylsulfonium, (4-*tert*-butoxyphenyl)bis(4-dimethylaminophenyl)sulfonium, tris(4-dimethylaminophenyl)sulfonium, 2-naphthyldiphenylsulfonium, dimethyl(2-naphthyl)sulfonium, (4-hydroxyphenyl)dimethylsulfonium, (4-methoxyphenyl)dimethylsulfonium, trimethylsulfonium, (2-oxocyclohexyl)cyclohexylmethylsulfonium, trinaphthylsulfonium, tribenzylsulfonium, diphenylmethylsulfonium, dimethylphenylsulfonium, 2-oxo-2-phenylethylthiacyclopentanium, diphenyl-2-thienylsulfonium, 4-*n*-butoxynaphthyl-1-thiacyclopentanium, 2-*n*-butoxynaphthyl-1-thiacyclopentanium, 4-methoxynaphthyl-1-thiacyclopentanium, and 2-methoxynaphthyl-1-thiacyclopentanium. More preferred examples of the sulfonium group include triphenylsulfonium, (4-*tert*-butylphenyl)diphenylsulfonium, (4-*tert*-butoxyphenyl)diphenylsulfonium, tris(4-*tert*-butylphenyl)sulfonium, (4-*tert*-butoxycarbonylmethyloxyphenyl)diphenylsulfonium, (4-methylphenyl)diphenylsulfonium, (4-ethylphenyl)diphenylsulfonium, (4-cyclohexylphenyl)diphenylsulfonium, (4-*n*-hexylphenyl)diphenylsulfonium, (4-*n*-octyl)phenyldiphenylsulfonium, (4-methoxyphenyl)diphenylsulfonium, (4-ethoxyphenyl)diphenylsulfonium, (4-*tert*-butoxyphenyl)diphenylsulfonium, (4-cyclohexyloxyphenyl)diphenylsulfonium, (4-trifluoromethylphenyl)diphenylsulfonium, (4-trifluoromethyloxyphenyl)diphenylsulfonium, and (4-*tert*-butoxycarbonylmethyloxyphenyl)diphenylsulfonium.

The "lanthanoid" represented by $M^1$ in the Formula (1) refers to an element selected from lanthanum, cerium, praseodymium, neodymium, promethium, samarium, europium, gadolinium, terbium, dysprosium, holmium, erbium, thulium, ytterbium, and lutetium.

In the compound (A) of the present invention, $M^1$ in the Formula (1) is preferably one selected from a hydrogen atom, alkali metal atoms (e.g., lithium and sodium), alkaline earth metal atoms (e.g., calcium, strontium, and barium), base metal atoms (e.g., magnesium and zinc), and polyvalent metal inorganic groups (e.g., basic aluminum and zirconium oxide).

Specific examples of the compound represented by the Formula (1) include the following compounds. It is noted here, however, that the compound (A) of the present invention is not restricted thereto.

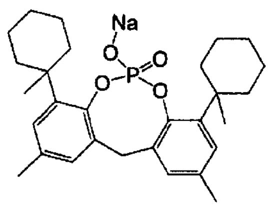
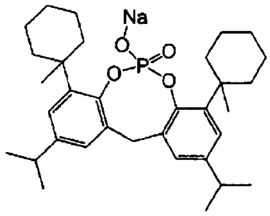
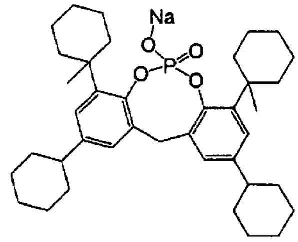
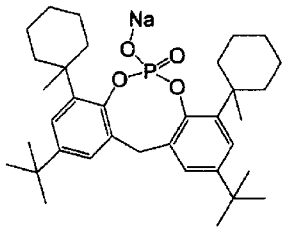
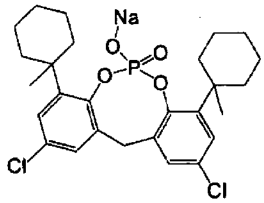
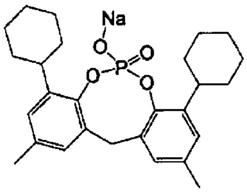
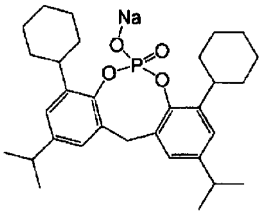
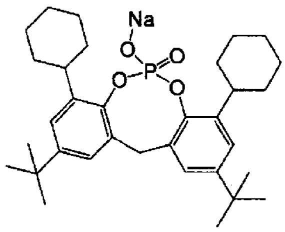
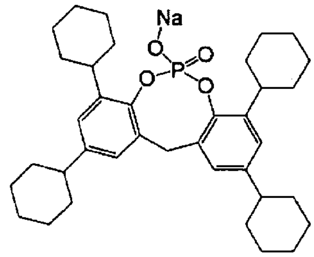
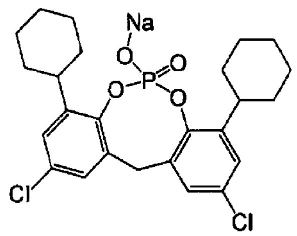
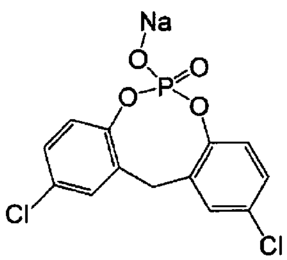
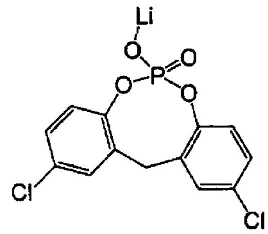
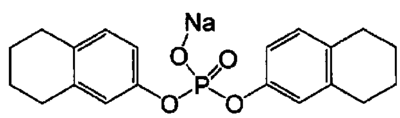
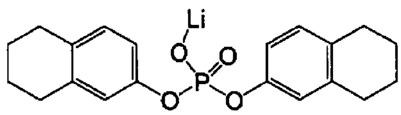
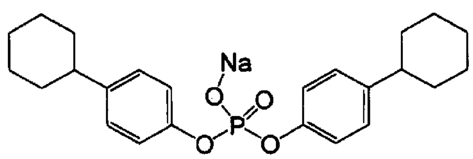
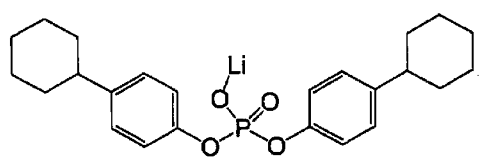
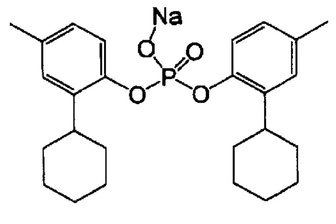
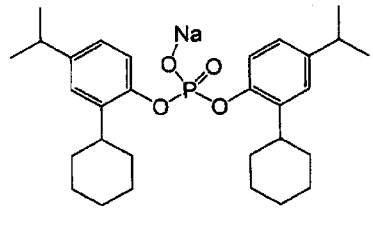
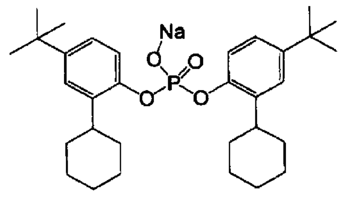

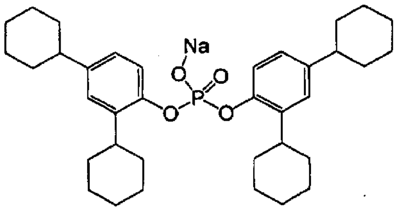
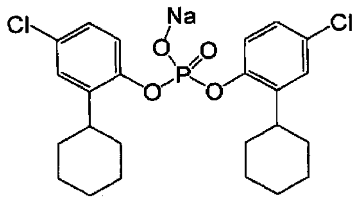
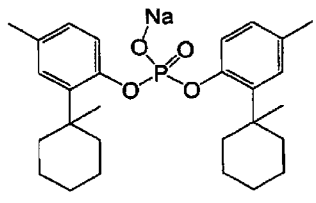

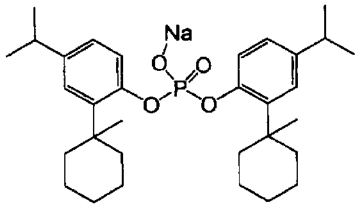
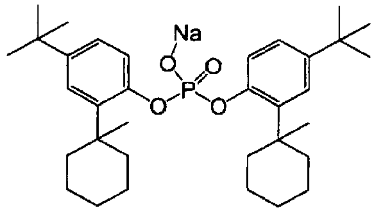
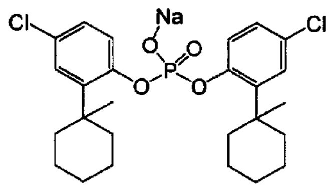

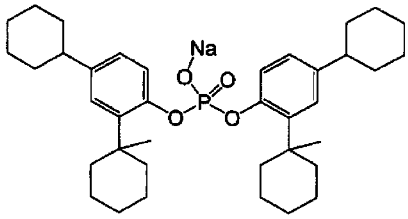
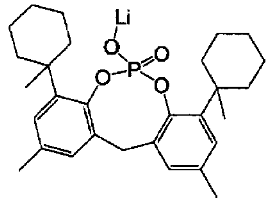
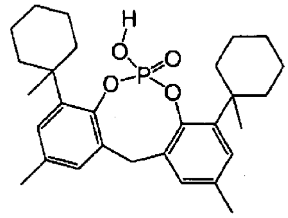

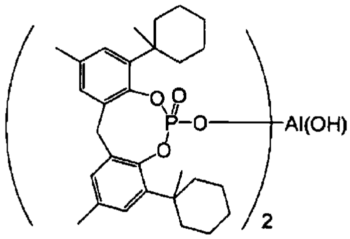
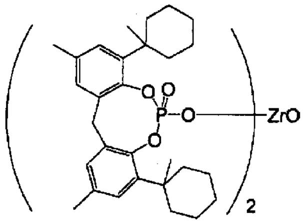
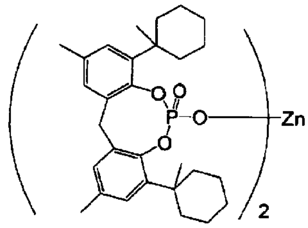

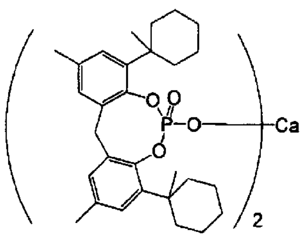
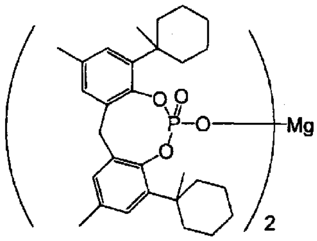
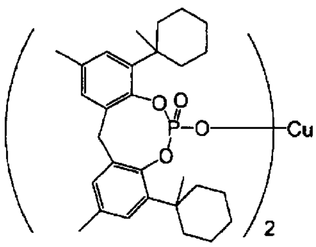

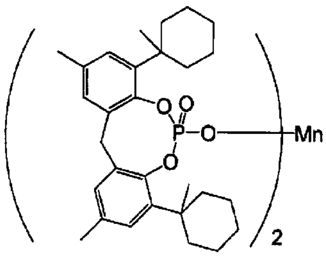
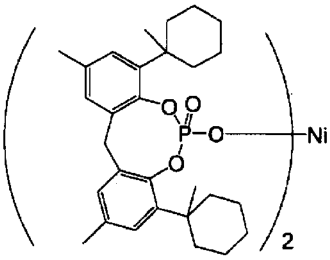
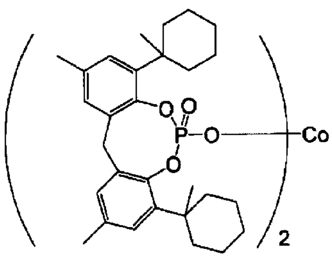

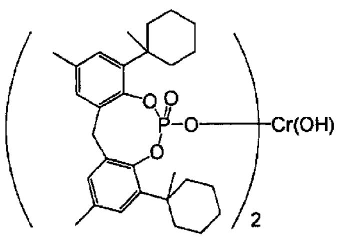
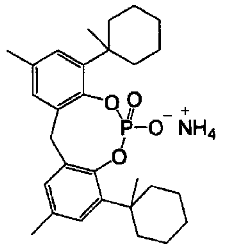
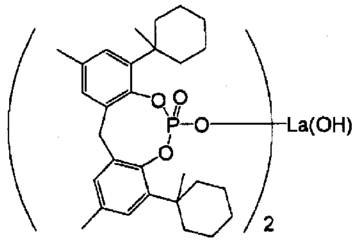

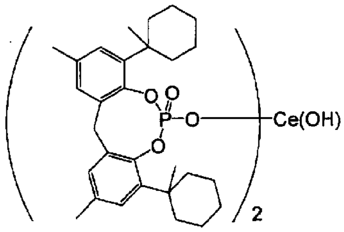
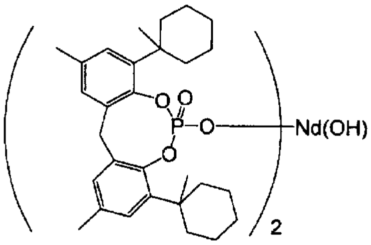
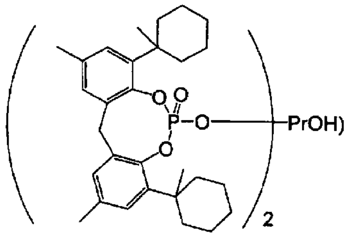

The compound (A) of the present invention is preferably a compound represented by the following Formula (2):

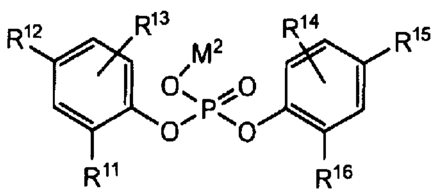

(2)

In the Formula (2), $M^2$ represents a hydrogen atom, sodium, or lithium; $R^{11}$ to $R^{16}$ each independently represent a hydrogen atom, a halogen atom, an alkyl group having 1 to 10 carbon atoms, or a cycloalkyl group having 3 to 20 carbon atoms; $R^{11}$ and $R^{16}$ are optionally linked together to form a methylene bridge; $R^{12}$ and $R^{13}$ and/or $R^{14}$ and $R^{15}$ are optionally linked together to form a fused ring with a benzene ring; and at least one of $R^{11}$ to $R^{16}$ represents a halogen atom or a cycloalkyl group, or forms a fused ring.

Examples of the halogen atom, alkyl group having 1 to 10 carbon atoms and cycloalkyl group having 3 to 20 carbon atoms that are represented by $R^{11}$ to $R^{16}$ in the Formula (2) are the same as those described above.

Examples of the fused ring with a benzene ring formed by linking of $R^{12}$ and $R^{13}$ and/or $R^{14}$ and $R^{15}$ in the Formula (2) are the same as those described above.

The compound (A) of the present invention is also preferably a compound represented by the following Formula (3):

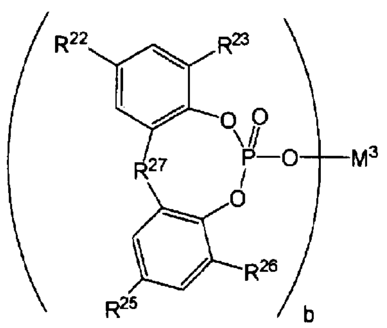

(3)

In the Formula (3), $R^{22}$, $R^{23}$, $R^{25}$ and $R^{26}$ each independently represent a hydrogen atom, a halogen atom, or a cycloalkyl group having 3 to 20 carbon atoms; $R^{27}$ represents methylene or 1-methylmethylene; at least one of $R^{22}$, $R^{23}$, $R^{25}$ and $R^{26}$ represents a halogen atom or a cycloalkyl group; b represents 1 or 2; $M^3$ represents a hydrogen atom, sodium, lithium, an alkaline earth metal atom, a transition metal atom, a base metal atom, a polyvalent metal inorganic group, an ammonium group, a sulfonium group, or a lanthanoid.

Examples of the halogen atom and cycloalkyl group having 3 to 20 carbon atoms that are represented by $R^{22}$, $R^{23}$, $R^{25}$ and $R^{26}$ in the Formula (3) are the same as those described above.

Examples of the alkaline earth metal atom, transition metal atom, base metal atom, polyvalent metal inorganic group, ammonium group, sulfonium group or lanthanoid represented by $M^3$ in the Formula (3) are the same as those described above.

The compound (A) of the present invention is particularly preferably a compound represented by the Formula (1) wherein $R^1$ and $R^6$ are linked together to form a methylene bridge, and $R^3$ and $R^4$ are both 1-methylcyclohexyl.

Next, the composition of the present invention will be described.

The composition of the present invention is characterized by containing the compound (A) of the present invention. In the composition of the present invention, the compound (A) is not restricted in terms of the particle conditions such as particle size and particle size distribution; however, it is known that the smaller the particle size, the superior is the dispersion of the compound (A) in a resin, and the volume-average particle size is preferably 100 $\mu$m or smaller, more preferably 30 $\mu$m or smaller, still more preferably 20 $\mu$m or smaller. The term "volume-average particle size" used herein refers to a numerical value at which the volume-average is 50% as measured by a laser diffraction-scattering particle size distribution analyzer (manufactured by Nikkiso Co., Ltd., trade name: MICROTRACT MT3000II).

It is preferred that the composition of the present invention further contain (B) a fatty acid metal salt represented by the following Formula (4) (hereinafter, also referred to as "component (B)"):

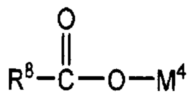 (4)

In the Formula (4), $R^8$ represents a group introduced from an aliphatic organic acid having 10 to 30 carbon atoms, and $M^4$ represents an alkali metal atom. The component (B) will now be described.

Examples of the group introduced from an aliphatic organic acid having 10 to 30 carbon atoms, which group is represented by $R^8$ in the Formula (4), include alkyl groups and alkenyl groups that have 10 to 30 carbon atoms, and hydrocarbon groups in which two or more unsaturated bonds are introduced. The alkyl groups and the alkenyl groups may be branched, and hydrogen atoms of the hydrocarbon groups may be substituted with hydroxyl groups. Specific examples include saturated fatty acids, such as capric acid, 2-ethylhexanoic acid, undecylic acid, lauric acid, tridecylic acid, myristic acid, pentadecylic acid, palmitic acid, margaric acid, stearic acid, nonadecylic acid, arachidic acid, heneicosylic acid, behenic acid, tricosylic acid, lignoceric acid, cerotic acid, montanoic acid, and melissic acid; and linear unsaturated fatty acids, such as 4-decenoic acid, 4-dodecenoic acid, palmitoleic acid, $\alpha$-linolenic acid, linoleic acid, $\gamma$-linolenic acid, stearidonic acid, petroselinic acid, oleic acid, elaidic acid, vaccenic acid, eicosapentaenoic acid, docosapentaenoic acid, and docosahexaenoic acid.

In the composition of the present invention, the component (B) is preferably a fatty acid metal salt having 10 to 21 carbon atoms, more preferably a fatty acid metal salt having 12 to 18 carbon atoms. The component (B) is particularly preferably a metal salt of lauric acid, myristic acid, palmitic acid, stearic acid, 12-hydroxystearic acid, oleic acid or linoleic acid since the effects of the present invention are attained prominently.

Examples of the alkali metal atom represented by $M^4$ in the Formula (4) include sodium, potassium, and lithium. In the composition of the present invention, sodium is more preferred since the effects of the present invention are attained prominently.

In the composition of the present invention, the mass ratio of the compound (A) and the component (B), (A)/(B), is in a range of 9/1 to 1/9, preferably in a range of 8/2 to 2/8. When the ratio of the compound (A) is higher than 9/1, the effects of using the compound (A) and the component (B) in combination are not exerted in some cases, whereas when the ratio of the component (B) is higher than 1/9, the thermal stability of a molded article obtained by adding the composition to a resin and molding the resultant may be deteriorated, and the effects of the present invention are not attained in some cases.

The composition of the present invention contains the compound (A) in an amount of preferably at least 10% by mass, more preferably 30% by mass or greater. The composition of the present invention may also contain the below-described additive(s) that can be incorporated into an olefin-based resin composition.

Next, the olefin-based resin composition of the present invention will be described.

The olefin-based resin composition of the present invention contains the compound (A) in a range of 0.001 to 20 parts by mass, preferably 0.03 to 5 parts by mass, more preferably 0.05 to 3 parts by mass, with respect to 100 parts by mass of an olefin-based resin. When the amount of the compound (A) is less than 0.001 parts by mass, the effects of the present invention may not be attained in some cases. Meanwhile, when the amount of the compound (A) is greater than 20 parts by mass, the effects of adding the compound (A) sometimes may not be obtained, which is uneconomical.

Examples of a resin that can be utilized in the olefin-based resin composition of the present invention include

$\alpha$-olefin polymers, such as low-density polyethylenes (LDPE), linear low-density polyethylenes (L-LDPE), high-density polyethylenes (HDPE), isotactic polypropylenes, syndiotactic polypropylenes, hemi-isotactic polypropylenes, cycloolefin polymers, stereo block polypropylenes, poly-3-methyl-1-butenes, poly-3-methyl-1-pentenes, and poly-4-methyl-1-pentenes; and $\alpha$-olefin copolymers, such as ethylene-propylene block or random copolymers, impact copolymer polypropylenes, ethylene-methyl methacrylate copolymers, ethylene-methyl acrylate copolymers, ethylene-ethyl acrylate copolymers, ethylene-butyl acrylate copolymers, ethylene-vinyl acetate copolymers, and ethylene-vinyl alcohol resins (EVOH), and the resin may be an elastomer as well. In the olefin-based resin composition of the present invention, two or more of the above-described resins may be blended, may form a block copolymer to be used as a block polymer-type resin, or may be alloyed. Further, the resin may be a chlorination product of these olefin-based resins.

Examples of the elastomer of the olefin-based resin include elastomers obtained by blending a polyolefin (e.g., polypropylene or polyethylene) as a hard segment and a rubber (e.g., ethylene-propylene rubber) as a soft segment, and elastomers obtained by dynamic cross-linking of these segments. The hard segment is, for example, at least one selected from polypropylene homopolymers, polypropylene block copolymers, polypropylene random copolymers and the like. Examples of the soft segment include ethylene-propylene copolymers (EPM), ethylene-propylene-diene copolymers (EPDM), ethylene-vinyl acetate copolymers (EVA), and vinyl acetate homopolymers. Two or more of these polymers may be used as a blend as well.

As for a method of producing the above-described olefin-based resin, in a variety of polymerization methods such as vapor-phase polymerization, solution polymerization, emulsion polymerization and bulk polymerization that include the use of various polymerization catalysts (e.g., Ziegler catalysts, Ziegler-Natta catalysts, and metallocene catalysts), co-catalysts, catalyst carriers and chain transfer agents, the olefin-based resin can be produced by appropriately selecting polymerization conditions (e.g., temperature, pressure, concentration, flow rate, and removal of catalyst residue) that yield a resin having physical properties suitable for a packaging material or a resin having physical properties suitable for molding of a packaging material. The properties of the olefin-based resin, such as number-average molecular weight, weight-average molecular weight, molecular weight distribution, melt flow rate, melting point, melting peak temperature, stereoregularity (e.g., isotacticity or syndiotacticity), presence/absence and degree of branching, specific gravity, ratio of a component(s) dissolving in various solvents, haze, gloss, impact strength, flexural modulus and Olsen rigidity, as well as whether or not the respective physical property values satisfy a specific formula, can be appropriately selected in accordance with the desired properties.

In the olefin-based resin composition of the present invention, the density of the olefin-based resin is preferably 0.890 to 0.970 $g/cm^3$, more preferably 0.900 to 0.940 $g/cm^3$. As for the average molecular weight, the weight-average molecular weight is preferably in a range of 10,000 to 7,000,000.

A method of blending the compound (A) of the present invention and the component (B) into the olefin-based resin is not particularly restricted, and any known resin additive blending technology can be employed. For example, any of a method of dry-blending the olefin-based resin in a powder or pellet form with the components, a method of adding the components to a polymerization system in advance when producing the olefin-based resin by polymerization, a method of adding the components during the polymerization, and a method of adding the components after the polymerization can be employed. Further, for example, a method of preparing a masterbatch containing any of the components at a high concentration and then adding the masterbatch to the olefin-based resin, or a method of processing some or all of the components into a pellet form and then adding the pellet to the olefin-based resin can be employed as well. Still further, any of the components that has been impregnated into a filler or granulated can be incorporated into a thermoplastic resin. Moreover, the components may be blended in advance and then added to the olefin-based resin, or the components may be added to the olefin-based resin separately.

As for a method of processing the components into a pellet form, a pellet can be produced by heating a mixture, which is obtained by mixing the composition of the present invention with a phenolic antioxidant, a polymer compound, a binder such as a petroleum resin and, as required, other additive(s) to be optionally incorporated, and then blending the mixture in the presence of the binder in a molten state. The processing conditions and the processing equipment are not restricted at all, and any well-known and commonly-used processing method and processing equipment can be employed. Specific examples of the production method include a disk pelleter method and an extrusion method.

In the olefin-based resin composition of the present invention, an optional and known resin additive(s) (e.g., a phenolic antioxidant, a phosphorus-based antioxidant, a thioether-based antioxidant, an ultraviolet absorber, a hindered amine compound, a nucleating agent, a flame retardant, a filler, a hydrotalcite, an antistatic agent, a fluorescent brightener, a pigment, and a dye) may also be incorporated within such a range that does not markedly impair the effects of the present invention.

Examples of the above-described phenolic antioxidant include 2,6-di-*tert*-butyl-4-ethylphenol, 2-*tert*-butyl-4,6-dimethylphenol, styrenated phenol, 2,2'-methylene-bis(4-ethyl-6-*tert*-butylphenol), 2,2'-thiobis-(6-*tert*-butyl-4-methylphenol), 2,2'-thiodiethylene-bis[3-(3,5-di-*tert*-butyl-4-hydroxyphenyl)propionate], 2-methyl-4,6-bis(octylsulfanylmethyl)phenol, 2,2'-isobutylidene-bis(4,6-dimethylphenol), isooctyl-3-(3,5-di-*tert*-butyl-4-hydroxyphenyl)propionate, *N*,*N'*-hexane-1,6-diylbis[3-(3,5-di-*tert*-butyl-4-hydroxyphenyl)propionamide, 2,2'-oxamide-bis[ethyl-3-(3,5-di-*tert*-butyl-4-hydroxyphenyl)propionate], 2-ethylhexyl-3-(3',5'-di-*tert*-butyl-4'-hydroxyphenyl)propionate, 2,2'-ethylene-bis(4,6-di-*tert*-butylphenol), esters of 3,5-bis(1,1-dimethylethyl)-4-hydroxy-benzenepropanoic acid and a C13-15 alkyl, 2,5-di-*tert*-amylhydroquinone, hindered phenol polymer (AO.OH. 98 (trade name), manufactured by ADEKA Palmarole), 2,2'-methylene-bis[6-(1-methylcyclohexyl)-*p*-cresol], 2-*tert*-butyl-6-(3-*tert*-butyl-2-hydroxy-5-methylbenzyl)-4-methylphenyl acrylate, 2-[1-(2-hydroxy-3,5-di-*tert*-pentylphenyl)ethyl]-4,6-di-*tert*-pentylphenyl acrylate, 6-[3-(3-*tert*-butyl-4-hydroxy-5-methyl)propoxyl-2,4,8,10-tetra-*tert*-butylbenzo[*d*,*f*][1,3,2]-dio xaphosphepin, hexamethylene-bis[3-(3,5-di-*tert*-butyl-4-hydroxyphenyl)propionate, calcium bis[monoethyl(3,5-di-*tert*-butyl-4-hydroxybenzyl)phosphonate, a reaction product between 5,7-bis(1,1-dimethylethyl)-3-hydroxy-2(3*H*)-benzofuranone and *o*-xylene, 2,6-di-*tert*-butyl-4-(4,6-bis(octylthio)-1,3,5-triazine-2-ylamino)phenol, DL-$\alpha$-tocophenol (vitamin E), 2,6-bis($\alpha$-methylbenzyl)-4-methylphenol, bis[3,3-bis-(4'-hydroxy-3'-*tert*-butyl-phenyl)butyric acid]glycol ester, 2,6-di-*tert*-butyl-*p*-cresol, 2,6-diphenyl-4-octadecyloxyphenol, stearyl(3,5-di-*tert*-butyl-4-hydroxyphenyl)propionate, distearyl(3,5-di-*tert*-butyl-4-hydroxybenzyl)phosphonate, tridecyl-3,5-di-*tert*-butyl-4-hydroxybenzyl thioacetate, thiodiethylene-bis[(3,5-di-*tert*-butyl-4-hydroxyphenyl)propionate], 4,4'-thiobis(6-*tert*-butyl-*m*-cresol), 2-octylthio-4,6-di(3,5-di-*tert*-butyl-4-hydroxyphenoxy)-*s*-triazine, 2,2'-methylene-bis(4-methyl-6-*tert*-butylphenol), bis[3,3-bis(4-hydroxy-3-*tert*-butylphenyl)butyric acid]glycol ester, 4,4'-butylidene-bis(2,6-di-*tert*-butylphenol), 4,4'-butylidene-bis(6-*tert*-butyl-3-methylphenol), 2,2'-ethylidene-bis(4,6-di-*tert*-butylphenol), 1,1,3-tris(2-methyl-4-hydroxy-5-*tert*-butylphenyl)butane, bis[2-*tert*-butyl-4-methyl-6-(2-hydroxy-3-*tert*-butyl-5-methylbenzyl)phenyl]terephthalate, 1,3,5-tris(2,6-dimethyl-3-hydroxy-4-*tert*-butylbenzyl)isocyanurate, 1,3,5-tris(3,5-di-*tert*-butyl-4-hydroxybenzyl)isocyanurate, 1,3,5-tris(3,5-di-*tert*-butyl-4-hydroxybenzyl)-2,4,6-trimethylbenzene, 1,3,5-tris[(3,5-di-*tert*-butyl-4-hydroxyphenyl)propionyloxyethyl]isocyanurate, tetrakis[methylene-3-(3',5'-di-*tert*-butyl-4'-hydroxyphenyl)propionate]methane, 2-*tert*-butyl-4-methyl-6-(2-acryloyloxy-3-*tert*-butyl-5-methylbenzyl)phenol, 3,9-bis[2-(3-*tert*-butyl-4-hydroxy-5-methylhydrocinnamoyloxy)-1,1-dimethylethyl]-2,4,8,10-t etraoxaspiro[5.5]undecane, triethylene glycol-bis[$\beta$-(3-*tert*-butyl-4-hydroxy-5-methylphenyl)propionate], and 3-(3,5-dialkyl-4-hydroxyphenyl)propionic acid derivatives, such as stearyl-3-(3,5-di-*tert*-butyl-4-hydroxyphenyl)propionic acid amide, palmityl-3-(3,5-di-*tert*-butyl-4-hydroxyphenyl)propionic acid amide, myristyl-3-(3,5-di-*tert*-butyl-4-hydroxyphenyl)propionic acid amide and lauryl-3-(3,5-di-*tert*-butyl-4-hydroxyphenyl)propionic acid amide. When a phenolic antioxidant is incorporated, the amount thereof is preferably 0.001 to 5 parts by mass, more preferably 0.03 to 3 parts by mass, with respect to 100 parts by mass of the olefin-based resin.

Examples of the above-described phosphorus-based antioxidant include triphenyl phosphite, diisooctyl phosphite, heptakis(dipropylene glycol)triphosphite, triisodecyl phosphite, diphenylisooctyl phosphite, diisooctylphenyl phosphite, diphenyltridecyl phosphite, triisooctyl phosphite, trilauryl phosphite, diphenyl phosphite, tris(dipropylene glycol)phosphite, diisodecylpentaerythritol diphosphite, dioleyl hydrogen phosphite, trilauryl trithiophosphite, bis(tridecyl)phosphite, tris(isodecyl)phosphite, tris(tridecyl)phosphite, diphenyldecyl phosphite, dinonylphenyl-bis(nonylphenyl)phosphite, poly(dipropylene glycol)phenyl phosphite, tetraphenyldipropyl glycol diphosphite, trisnonylphenyl phosphite, tris(2,4-di-*tert*-butylphenyl)phosphite, tris(2,4-di-*tert*-butyl-5-methylphenyl)phosphite, tris[2-*tert*-butyl-4-(3-*tert*-butyl-4-hydroxy-5-methylphenylthio)-5-methylphenyl]phosphite, tri(decyl) phosphite, octyldiphenyl phosphite, di(decyl)monophenyl phosphite, distearyl pentaerythritol diphosphite, a mixture of distearyl pentaerythritol and calcium stearate, alkyl(C10) bisphenol-A phosphite, di(tridecyl)pentaerythritol diphosphite, di(nonylphenyl)pentaerythritol diphosphite, bis(2,4-di-*tert*-butylphenyl)pentaerythritol diphosphite, bis(2,6-di-*tert*-butyl-4-methylphenyl)pentaerythritol diphosphite, bis(2,4,6-tri-*tert*-butylphenyl)pentaerythritol diphosphite, bis(2,4-dicumylphenyl)pentaerythritol diphosphite, tetraphenyl-tetra(tridecyl)pentaerythritol tetraphosphite, bis(2,4-di-*tert*-butyl-6-methylphenyl)ethyl phosphite, tetra(tridecyl)isopropylidene diphenol diphosphite, tetra(tridecyl)-4,4'-*n*-butylidene-bis(2-*tert*-butyl-5-methylphenol)diphosphite, hexa(tridecyl)-1,1,3-tris(2-methyl-4-hydroxy-5-*tert*-butylphenyl)butane triphosphite, tetrakis(2,4-di-*tert*-butylphenyl)biphenylene diphosphonite, 9,10-dihydro-9-oxa-10-phosphaphenanthrene-10-oxide, (1-methyl-1-propanyl-3-ylidene)-tris(1,1-dimethylethyl)-5-methyl-4,1-phenylene)hexatridecyl phosphite, 2,2'-methylene-bis(4,6-*tert*-butylphenyl)-2-ethylhexyl phosphite, 2,2'-methylene-bis(4,6-di-*tert*-butylphenyl)-octadecyl phosphite, 2,2'-ethylidene-bis(4,6-di-*tert*-butylphenyl)fluorophosphite, 4,4'-butylidene-bis(3-methyl-6-*tert*-butylphenylditridecyl)phosphite, tris(2-[(2,4,8,10-tetrakis-*tert*-butyldibenzo[*d*,*f*][1,3,2]dioxaphosphepin-6-yl)oxy]ethyl)amine, 3,9-bis(4-nonylphenoxy)-2,4,8,10-tetraoxa-3,9-diphosphaspiro[5.5]undecane, 2,4,6-tri-*tert*-butylphenyl-2-butyl-2-ethyl-1,3-propanediol phosphite, and poly-4,4'-isopropylidene diphenol C12-15 alcohol phosphite. When a phosphorus-based antioxidant is incorporated, the amount thereof is preferably 0.001 to 10 parts by mass, more preferably 0.01 to 0.5 parts by mass, with respect to 100 parts by mass of the olefin-based resin.

Examples of the above-described thioether-based antioxidant include tetrakis[methylene-3-(laurylthio)propionate]methane, bis(methyl-4-[3-*n*-alkyl(C12/C14)thiopropionyloxy]-5-*tert*-butylphenyl)sulfide, ditridecyl-3,3'-thiodipropionate, dilauryl-3,3'-thiodipropionate, dimyristyl-3,3'-thiodipropionate, distearyl-3,3'-thiodipropionate, lauryl/stearyl thiodipropionate, 4,4'-thiobis(6-*tert*-butyl-*m*-cresol), 2,2'-thiobis(6-*tert*-butyl-*p*-cresol), and distearyl disulfide. When a thioether-based antioxidant is incorporated, the amount thereof is preferably 0.001 to 10 parts by mass, more preferably 0.01 to 0.5 parts by mass, with respect to 100 parts by mass of the olefin-based resin.

Examples of the above-described ultraviolet absorber include 2-hydroxybenzophenones, such as 2,4-dihydroxybenzophenone and 5,5'-methylene-bis(2-hydroxy-4-methoxybenzophenone); 2-(2-hydroxyphenyl)benzotriazoles, such as 2-(2-hydroxy-5-methylphenyl)benzotriazole, 2-(2-hydroxy-5-*tert*-octylphenyl) benzotriazole, 2-(2-hydroxy-3,5-di-*tert*-butylphenyl)-5-chlorobenzotriazole, 2-(2-hydroxy-3-*tert*-butyl-5-methylphenyl)-5-chlorobenzotriazole, 2-(2-hydroxy-3,5-dicumylphenyl)benzotriazole, 2,2'-methylene-bis(4-*tert*-octyl-6-benzotriazolylphenol), polyethylene glycol esters of 2-(2-hydroxy-3-*tert*-butyl-5-carboxyphenyl)benzotriazole, 2-[2-hydroxy-3-(2-acryloyloxyethyl)-5-methylphenyl]benzotriazole, 2-[2-hydroxy-3-(2-methacryloyloxyethyl)-5-*tert*-butylphenyl]benzotriazole, 2-[2-hydroxy-3-(2-methacryloyloxyethyl)-5-*tert*-octylphenyl]benzotriazole, 2-[2-hydroxy-3-(2-methacryloyloxyethyl)-5-*tert*-butylphenyl]-5-chlorobenzotriazole, 2-[2-hydroxy-5-(2-methacryloyloxyethyl)phenyl]benzotriazole, 2-[2-hydroxy-3-*tert*-butyl-5-(2-methacryloyloxyethyl)phenyl]benzotriazole, 2-[2-hydroxy-3-*tert*-amyl-5-(2-methacryloyloxyethyl)phenyl]benzotriazole, 2-[2-hydroxy-3-*tert*-butyl-5-(3-methacryloyloxypropyl)phenyl]-5-chlorobenzotriazole, 2-[2-hydroxy-4-(2-methacryloyloxymethyl)phenyl]benzotriazole, 2-[2-hydroxy-4-(3-methacryloyloxy-2-hydroxypropyl)phenyl]benzotriazole, and 2-[2-hydroxy-4-(3-methacryloyloxypropyl)phenyl]benzotriazole; benzoates, such as phenyl salicylate, resorcinol monobenzoate, 2,4-di-*tert*-butylphenyl-3,5-di-*tert*-butyl-4-hydroxybenzoate, octyl(3,5-di-*tert*-butyl-4-hydroxy)benzoate, dodecyl(3,5-di-*tert*-butyl-4-hydroxy)benzoate, tetradecyl(3,5-di-*tert*-butyl-4-hydroxy)benzoate, hexadecyl(3,5-di-*tert*-butyl-4-hydroxy)benzoate, octadecyl(3,5-di-*tert*-butyl-4-hydroxy)benzoate, and behenyl(3,5-di-*tert*-butyl-4-hydroxy)benzoate; substituted oxanilides such as 2-ethyl-2'-ethoxyoxanilide and 2-ethoxy-4'-dodecyloxanilide; cyanoacrylates, such as ethyl-$\alpha$-cyano-$\beta$,$\beta$-diphenylacrylate, and methyl-2-cyano-3-methyl-3-(*p*-methoxyphenyl)acrylate; and a variety of metal salts and metal chelates, particularly salts and chelates of nickel and chromium. When an ultraviolet absorber is incorporated, the amount thereof is preferably 0.001 to 10 parts by mass, more preferably 0.01 to 0.5 parts by mass, with respect to 100 parts by mass of the olefin-based resin.

Examples of the above-described hindered amine compound include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl)·di(tridecyl)-1,2,3,4-butanetetracarboxylate, bis(1,2,2,6,6-pentamethyl-4-piperidyl)·di(tridecyl)-1,2,3,4-butanetetracarboxylate, bis(1,2,2,4,4-pentamethyl-4-piperidyl)-2-butyl-2-(3,5-di-*tert*-butyl-4-hydroxybenzyl)malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/2,4-dichloro-6-morpholino-*s*-triazine polycondensate, 1,6-bis(2,2,6,6-tetramethyl-4-piperidylamino)hexane/2,4-dichloro-6-*tert*-octylamino-*s*-triazin e polycondensate, 1,5,8,12-tetrakis[2,4-bis(*N*-butyl-*N*-(2,2,6,6-tetramethyl-4-piperidyl)amino)-*s*-triazine-6-yl]-1, 5,8,12-tetraazadodecane, 1,5,8,12-tetrakis[2,4-bis(*N*-butyl-*N*-(1,2,2,6,6-pentamethyl-4-piperidyl)amino)-*s*-triazine-6-yl] -1,5,8,12-tetraazadodecane, 1,6,11-tris[2,4-bis(*N*-butyl-*N*-(2,2,6,6-tetramethyl-4-piperidyl)amino)-*s*-triazine-6-yl]aminoun decane, 1,6,11-tris[2,4-bis(*N*-butyl-*N*-(1,2,2,6,6-pentamethyl-4-piperidyl)amino)-*s*-triazine-6-yl]amino undecane, bis{4-(1-octyloxy-2,2,6,6-tetramethyl)piperidyl}decanedionate, bis{4-(2,2,6,6-tetramethyl-1-undecyloxy)piperidyl)carbonate, and TINUVIN NOR 371 manufactured by BASF Ltd. When a hindered amine compound is incorporated, the amount thereof is preferably 0.001 to 10 parts by mass, more preferably 0.01 to 0.5 parts by mass, with respect to 100 parts by mass of the olefin-based resin.

Examples of the above-described nucleating agent include sodium-2,2'-methylene-bis(4,6-di-*tert*-butylphenyl)phosphate; lithium-2,2'-methylene-bis(4,6-di-*tert*-butylphenyl)phosphate; aluminum hydroxy-bis[2,2'-methylene-bis(4,6-di-*tert*-butylphenyl)phosphate]; metal carboxylates, such as sodium benzoate, aluminum 4-*tert*-butylbenzoate, sodium adipate, and 2-sodium-bicyclo[2.2.1]heptane-2,3-dicarboxylate; polyol derivatives, such as dibenzylidene sorbitol, bis(methylbenzylidene)sorbitol, bis(3,4-dimethylbenzylidene)sorbitol, bis(*p*-ethylbenzylidene)sorbitol, bis(dimethylbenzylidene)sorbitol, and 1,2,3-trideoxy-4,6:5,7-bis-O-((4-propylphenyl)methylene)nonitol; and amide compounds, such as *N*,*N*,*N*'-tris[2-methylcyclohexyl]-1,2,3-propane tricarboxamide, *N*,*N*',*N*''-tricyclohexyl-1,3,5-benzene tricarboxamide, *N*,*N*'-dicyclohexylnaphthalene dicarboxamide, and 1,3,5-tri(dimethylisopropoylamino)benzene. When a nucleating agent is incorporated, the amount thereof is preferably 0.001 to 10 parts by mass, more preferably 0.01 to 5 parts by mass, with respect to 100 parts by mass of the olefin-based resin.

Examples of the above-described flame retardant include aromatic phosphates, such as triphenyl phosphate, tricresyl phosphate, trixylenyl phosphate, cresyldiphenyl phosphate, cresyl-2,6-dixylenyl phosphate, resorcinol-bis(diphenylphosphate), (1-methylethylidene)-4,1-phenylene tetraphenyldiphosphate, 1,3-phenylene-tetrakis(2,6-dimethylphenyl)phosphate, ADK STAB FP-500 (trade name, manufactured by ADEKA Corporation), ADK STAB FP-600 (trade name, manufactured by ADEKA Corporation), and ADK STAB FP-800 (trade name, manufactured by ADEKA Corporation); phosphonates, such as divinyl phenylphosphonate, diallyl phenylphosphonate, and (1-butenyl) phenylphosphonate; phosphinates, such as phenyl diphenylphosphinate, methyl diphenylphosphinate, and 9,10-dihydro-9-oxa-10-phosphaphenanthlene-10-oxide derivatives; phosphazene compounds, such as bis(2-allylphenoxy)phosphazene and dicresylphosphazene; phosphorus-based flame retardants, such as melamine phosphate, melamine pyrophosphate, melamine polyphosphate, melam polyphosphate, ammonium polyphosphate, piperazine phosphate, piperazine pyrophosphate, piperazine polyphosphate, phosphorus-containing vinylbenzyl compounds, and red phosphorus; metal hydroxides, such as magnesium hydroxide and aluminum hydroxide; and bromine-based flame retardants, such

as brominated bisphenol A-type epoxy resins, brominated phenol novolac-type epoxy resins, hexabromobenzene, pentabromotoluene, ethylene-bis(pentabromophenyl), ethylene-bis-tetrabromophthalimide, 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene, 2,4,6-tris(tribromophenoxy)-1,3,5-triazine, tribromophenyl maleimide, tribromophenyl acrylate, tribromophenyl methacrylate, tetrabromobisphenol A-type dimethacrylate, pentabromobenzyl acrylate, and brominated styrene. These flame retardants are preferably used in combination with a drip inhibitor such as a fluorocarbon resin, and/or a flame retardant aid such as a polyhydric alcohol or hydrotalcite. When a flame retardant is incorporated, the amount thereof is preferably 1 to 100 parts by mass, more preferably 10 to 70 parts by mass, with respect to 100 parts by mass of the olefin-based resin.

Examples of the above-described filler include talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fibers, clays, dolomite, mica, silica, alumina, potassium titanate whiskers, wollastonite, and fibrous magnesium oxysulfate, and any of these fillers can used by appropriately selecting the particle size (the fiber diameter, fiber length and aspect ratio in the case of a fibrous filler). Further, the filler to be used may be subjected to a surface treatment as required. When a filler is incorporated, the amount thereof is preferably 0.01 to 80 parts by mass, more preferably 1 to 50 parts by mass, with respect to 100 parts by mass of the olefin-based resin.

The above-described hydrotalcite is a complex salt compound which is known as a natural or synthetic product and composed of magnesium, aluminum, hydroxyl groups, a carbonate group and arbitrary crystal water, and examples thereof include hydrotalcites in which some of the magnesium or aluminum atoms are substituted with other metal such as an alkali metal or zinc; and hydrotalcites in which the hydroxyl group(s) and/or carbonate group is/are substituted with other anionic group(s), specifically hydrotalcites represented by the following Formula (5) in which a metal is substituted with an alkali metal. In addition, as an Al-Li hydrotalcite, a compound represented by the following Formula (6) can be used as well.

$$Mg_{x1}Zn_{x2}Al_2(OH)_{2(x1+x2)+4}(CO_3)pH_2O \qquad (5)$$

where x1 and x2 each represent a number that satisfies the conditions represented by the following equations; and p represents 0 or a positive number:

$$0 \leq x2/x1 < 10,\ 2 \leq (x1 + x2) \leq 20.$$

$$[Li_{1/3}Al_{2/3}(OH)_2]\cdot[A^{q-}{}_{1/3q}\cdot pH_2O] \qquad (6),$$

where $A^{q-}$ represents an anion having a valence of q; and p represents 0 or a positive number.

Further, the carbonate anion in the above-described hydrotalcites may be partially substituted with other anion.

In these hydrotalcites, the crystal water may be dehydrated, and the hydrotalcites may be coated with, for example, a higher fatty acid such as stearic acid, a higher fatty acid metal salt such as alkali metal oleate, a metal organic sulfonate such as alkali metal dodecylbenzenesulfonate, a higher fatty acid amide, a higher fatty acid ester, or a wax.

The hydrotalcite may be a naturally-occurring or synthetic hydrotalcite. Examples of a synthesis method thereof include known methods that are described in JPS46-2280B, JPS50-30039B, JPS51-29129B, JPH03-36839B, JPS61-174270A, JPH05-179052A and the like. Further, the above-exemplified hydrotalcites can be used without any restriction on the crystal structure, crystal particles and the like. When a hydrotalcite is incorporated, the amount thereof is preferably 0.001 to 5 parts by mass, more preferably 0.05 to 3 parts by mass, with respect to 100 parts by mass of the olefin-based resin.

A lubricant is added for the purposes of imparting the surface of the resulting molded article with lubricity and improving the damage-preventing effect. Examples of the lubricant include unsaturated fatty acid amides, such as oleic acid amide and erucic acid amide; saturated fatty acid amides, such as behenic acid amide and stearic acid amide; butyl stearate; stearyl alcohols; stearic acid monoglyceride; sorbitan monopalmitate; sorbitan monostearate; mannitol; stearic acid; hardened castor oil; stearic acid amide; oleic acid amide; and ethylene-bis stearic acid amide. These lubricants may be used individually, or two or more thereof may be used in combination. When a lubricant is incorporated, the amount thereof is preferably 0.01 to 2 parts by mass, more preferably 0.03 to 0.5 parts by mass, with respect to 100 parts by mass of the olefin-based resin.

Examples of the above-described antistatic agent include cationic antistatic agents, such as fatty acid quaternary ammonium ion salts and polyamine quaternary salts; anionic antistatic agents, such as higher alcohol phosphates, higher alcohol EO adducts, polyethylene glycol fatty acid esters, anionic alkyl sulfonates, higher alcohol sulfates, higher alcohol ethylene oxide adduct sulfates, and higher alcohol ethylene oxide adduct phosphates; nonionic antistatic agents,

such as polyhydric alcohol fatty acid esters, polyglycol phosphates, and polyoxyethylene alkyl allyl ethers; and amphoteric antistatic agents, such as amphoteric alkyl betaines (e.g., alkyldimethylamino acetic acid betaines) and imidazoline-type amphoteric activators. These antistatic agents may be used individually, or two or more thereof may be used in combination. When an antistatic agent is incorporated, the amount thereof is preferably 0.01 to 20 parts by mass, more preferably 3 to 10 parts by mass, with respect to 100 parts by mass of the olefin-based resin.

The above-described fluorescent brightener refers to a compound which enhances the whiteness or blueness of a molded article by a fluorescent action of absorbing ultraviolet rays of solar light and artificial light, converting the absorbed ultraviolet rays into visible light of purple to blue and radiating the visible light. Examples of the fluorescent brightener include C.I. Fluorescent Brightener 184, which is a benzoxazole-based compound; C.I. Fluorescent Brightener 52, which is a coumarin-based compound; and C.I. Fluorescent Brighteners 24, 85 and 71, which are diaminostyryl benzyl sulfone-based compounds. When a fluorescent brightener is used, the amount thereof is preferably 0.00001 to 0.1 parts by mass, more preferably 0.00005 to 0.05 parts by mass, with respect to 100 parts by mass of the olefin-based resin.

As the above-described pigment, a commercially available pigment can be used as well, and examples thereof include PIGMENT RED 1, 2, 3, 9, 10, 17, 22, 23, 31, 38, 41, 48, 49, 88, 90, 97, 112, 119, 122, 123, 144, 149, 166, 168, 169, 170, 171, 177, 179, 180, 184, 185, 192, 200, 202, 209, 215, 216, 217, 220, 223, 224, 226, 227, 228, 240, and 254; PIGMENT ORANGE 13, 31, 34, 36, 38, 43, 46, 48, 49, 51, 52, 55, 59, 60, 61, 62, 64, 65 and 71; PIGMENT YELLOW 1, 3, 12, 13, 14, 16, 17, 20, 24, 55, 60, 73, 81, 83, 86, 93, 95, 97, 98, 100, 109, 110, 113, 114, 117, 120, 125, 126, 127, 129, 137, 138, 139, 147, 148, 150, 151, 152, 153, 154, 166, 168, 175, 180, and 185; PIGMENT GREEN 7, 10, and 36; PIGMENT BLUE 15, 15:1, 15:2, 15:3, 15:4, 15:5, 15:6, 22, 24, 29, 56, 60, 61, 62, and 64; and PIGMENT VIOLET 1, 15, 19, 23, 27, 29, 30, 32, 37, 40, and 50.

Examples of the above-described dye include azo dyes, anthraquinone dyes, indigoid dyes, triarylmethane dyes, xanthene dyes, alizarin dyes, acridine dyes, stilbene dyes, thiazole dyes, naphthol dyes, quinoline dyes, nitro dyes, indamine dyes, oxazine dyes, phthalocyanine dyes and cyanine dyes, and a plurality of these dyes may be used in combination.

The molded article of the present invention is obtained by molding the olefin-based resin composition of the present invention. The olefin-based resin composition of the present invention can be molded by a known molding method. For example, a molded article can be obtained by injection molding, extrusion molding, blow molding, vacuum molding, inflation molding, calender molding, slush molding, dip molding, or foam molding.

Examples of the use of the olefin-based resin composition of the present invention include automobile materials, such as bumpers, dash boards, and instrument panels; housing applications, such as refrigerators, laundry machines, and vacuum cleaners; electrical and mechanical components; household articles, such as tablewares, buckets, and bath goods; miscellaneous goods, such as toys and stationeries; medical equipment, such as disposable syringes that are sterilized with heat, radiation or the like, infusion/blood transfusion sets, and blood collection equipment; various cases, such as clothing cases and containers for clothing storage; cups to be filled with food items; packaging containers and caps, such as bottles and packages for food wrapping, retort-packed food items, microwaves, beverages, seasonings, cosmetics, medical supplies and shampoos; cases for food items, such as rice, bread and pickles; transportation packaging materials; tanks; bottles; films; sheets; and fibers. Further, the olefin-based resin composition of the present invention can also be blended with glass fibers, carbon fibers and the like to be used as a fiber-reinforced plastic.

## EXAMPLES

The present invention will now be described more concretely by way of Production Examples, Examples and Comparative Examples; however, the present invention is not restricted thereto by any means. Evaluations in the present invention were performed under the below-described conditions.

[Production Example 1]

<Production of Compound 1 (sodium-2,10-dimethyl-4,8-bis(1-methylcyclohexyl)-12*H*-dibenzo[*d*,*g*][1,3,2]dioxaphosphoci n-6-oleate-6-oxide)>

First, 6.24 g (0.015 mol) 2,2'-methylene-bis(6-(1-methylcyclohexyl)-*p*-cresol) was dissolved in 50 g (0.63 mol) of pyridine, and the resulting solution was stirred with cooling in ice. Subsequently, after adding 2.84 g (0.019 mol, 1.25 eq) of phosphorus oxychloride to the solution in small amounts, the solution was heated to 70°C and allowed to react for 25 hours. After the completion of the reaction, the solution was cooled at room temperature and further stirred with cooling in ice.

Next, the resulting reaction solution was adjusted to have a pH of 9 by adding thereto sodium hydroxide, and the reaction solution was subsequently heated to remove the solvent under reduced pressure at 80°C. After the solvent

removal, the resultant was recovered by filtration and then washed with water to obtain a pale yellow solid. The thus obtained compound was dried for 4 hours at 110°C under vacuum, whereby 6.74 g of a desired Compound 1 was obtained. This Compound 1 was identified by measuring $^1H$-NMR and $^{31}P$-NMR. The identification results are shown below.

<Identification Results of Compound 1>

$^1H$-NMR (400 MHz, DMSO-$d_6$): $\delta$ = 6.97 (s, 2H), 6.84 (s, 2H), 3.80 (s, 2H), 2.29 (m, 4H), 2.20 (s, 6H), 1.53-1.45 (m, 8H), 1.45-1.27 (m, 8H), 1.27 (s, 6H)
$^{31}P$-NMR (400 MHz, DMSO-$d_6$): $\delta$ = -10.45 (s, 1P)

[Production Example 2]

<Production of Compound 2 (sodium-bis(4-cyclohexylphenyl)phosphate)>

First, 10.00 g (0.057 mol) of 4-cyclohexylphenol was dissolved in 50 g (0.63 mol) of pyridine, and the resulting solution was stirred with cooling in ice. Subsequently, after adding 4.43 g (0.029 mol, 0.5 eq) of phosphorus oxychloride to the solution in small amounts, the solution was heated to 50°C and allowed to react for 8 hours. After the completion of the reaction, the solution was stirred with cooling in ice.
Next, the resulting reaction solution was adjusted to have a pH of 9 by adding thereto sodium hydroxide, and formation of a white precipitate was confirmed. The precipitate was recovered by filtration and subsequently washed with purified water and acetone to obtain a white solid. The thus obtained compound was dried for 4 hours at 110°C under vacuum, whereby 7.88 g of a desired Compound 2 was obtained. This Compound 2 was identified by measuring $^1H$-NMR and $^{31}P$-NMR. The identification results are shown below.

<Identification Results of Compound 2>

$^1H$-NMR (400 MHz, DMSO-$d_6$): $\delta$ = 7.02 (dd, J = 13.6 Hz, 8.80 Hz, 8 Hz), 2.43-2.37 (m, 2H), 1.76-1.66 (m, 10H), 1.34 (*quin*, J = 33.2 Hz, 24.4 Hz, 12.8 Hz, 8H), 1.25-1.19 (m, 2H)
$^{31}P$-NMR (400 MHz, DMSO-$d_6$): $\delta$ = -10.9 (s, 1P)

[Production Example 3]

<Production of Compound 3 (sodium-2,10-dichloro-12*H*-dibenzo[*d*,*g*][1,3,2]dioxaphosphocin-6-oleate-6-oxide)>

First, 10.00 g (0.037 mol) of 2,2'-methylene-bis(4-chlorophenol) was dissolved in 40 g (0.51 mol) of pyridine, and the resulting solution was stirred with cooling in ice. Subsequently, after adding 8.65 g (0.056 mol, 1.5 eq) of phosphorus oxychloride to the solution in small amounts, the solution was slowly heated to room temperature, then further heated to 60°C, and allowed to react for 3 hours. After the completion of the reaction, the solution was stirred with cooling in ice.
Next, the resulting reaction solution was adjusted to have a pH of 9 by adding thereto sodium hydroxide, and the reaction solution was subsequently heated to remove the solvent under reduced pressure at 80°C. After the solvent removal, ice water was added to the resultant, and a pale orange solid was recovered by suction filtration. The thus obtained compound was dried for 4 hours at 100°C under vacuum, whereby 8.73 g of a desired Compound 3 was obtained. This Compound 3 was identified by measuring $^1H$-NMR and $^{31}P$-NMR. The identification results are shown below.

<Identification Results of Compound 3>

$^1H$-NMR (400 MHz, DMSO-$d_6$): $\delta$ = 7.54 (d, J = 2.8 Hz, 2H), 7.12 (dd, J = 8.4 Hz, 2.4 Hz, 2H), 6.82 (dd, J = 8.8 Hz, 1.6 Hz, 2H), 3.88 (d, J = 1.2 Hz, 2H)
$^{31}P$-NMR (400 MHz, DMSO-$d_6$): $\delta$ = -12.9 (s, 1P)

[Production Example 4]

<Production of Compound 4 (sodium-bis(5,6,7,8-tetrahydronaphthalene-2-yl)phosphate)>

First, 10.00 g (0.067 mol) of 5,6,7,8-tetrahydro-2-naphthol was dissolved in 50 g (0.63 mol) of pyridine, and the

resulting solution was stirred with cooling in ice. Subsequently, after adding 5.27 g (0.034 mol, 0.51 eq) of phosphorus oxychloride to the solution in small amounts, the solution was slowly heated to room temperature, then further heated to 50°C, and allowed to react for 10 hours. After the completion of the reaction, the solution was stirred with cooling in ice.

Next, the resulting reaction solution was adjusted to have a pH of 9 by adding thereto sodium hydroxide, and the reaction solution was subsequently heated to remove the solvent under reduced pressure at 80°C. After the solvent removal, a liquid separation operation was performed using ethyl acetate and purified water, and the solvent was removed from the resulting aqueous layer at 80°C under reduced pressure. Then, ice water was further added thereto, and a viscous material was recovered by suction filtration. The thus obtained compound was dried for 4 hours at 110°C under vacuum, whereby a desired Compound 4 was obtained. This Compound 4 was identified by measuring $^{1}$H-NMR and $^{31}$P-NMR. The identification results are shown below.

<Identification Results of Compound 4>

$^{1}$H-NMR (400 MHz, DMSO-$d_6$): $\delta$= 6.86-6.78 (m, 6H), 2.62 (d, J = 2.8 Hz, 8H), 1.69 (dd, J = 5.2 Hz, 3.2 Hz, 4H)
$^{31}$P-NMR (400 MHz, DMSO-$d_6$): $\delta$ = -11.0 (s, 1P)

[Production Example 5]

<Production of Compound 5 (sodium-2,10-dimethyl-4,8-dicyclohexyl-12*H*-dibenzo[*d*,*g*][1,3,2]dioxaphosphocin-6-oleate-6 -oxide)>

First, 5.00 g (0.013 mol) of 2,2'-methylene-bis(6-cyclohexyl-*p*-cresol) was dissolved in 30 g (0.38 mol) of pyridine, and the resulting solution was stirred with cooling in ice. Subsequently, after adding 3.04 g (0.020 mol, 1.5 eq) of phosphorus oxychloride to the solution in small amounts, the solution was heated to 60°C and allowed to react for 3 hours. After the completion of the reaction, the solution was cooled at room temperature and further stirred with cooling in ice.

Next, the resulting reaction solution was adjusted to have a pH of 9 by adding thereto sodium hydroxide, and the reaction solution was subsequently heated to remove the solvent under reduced pressure at 80°C. After the solvent removal, purified water was added to the resultant, and a white solid was recovered by suction filtration. The thus obtained compound was dried at 100°C under vacuum, whereby a desired Compound 5 was obtained. This Compound 5 was identified by measuring $^{1}$H-NMR and $^{31}$P-NMR. The identification results are shown below.

<Identification Results of Compound 5>

$^{1}$H-NMR (400 MHz, DMSO-$d_6$): $\delta$ = 6.88 (d, J = 1.6 Hz, 2H), 6.74 (d, J = 2.0 Hz, 2H), 3.74 (s, 2H), 3.02-2.95 (m, 2H), 2.16 (s, 6H), 1.78-1.67 (m, 10H), 1.42-1.36 (m, 10H)
$^{31}$P-NMR (400 MHz, DMSO-$d_6$): $\delta$ = -12.1 (s, 1P)

[Production Example 6]

<Production of Compound 6 (lithium-2,10-dimethyl-4,8-bis(1-methylcyclohexyl)-12*H*-dibenzo[*d*,*g*][1,3,2]dioxaphosphocin-6-oleate-6-oxide)>

First, 9.00 g (0.021 mol) of 2,2'-methylene-bis(6-(1-methylcyclohexyl)-*p*-cresol) was dissolved in 50 g (0.63 mol) of pyridine, and the resulting solution was stirred with cooling in ice. Subsequently, after adding 4.11 g (0.027 mol, 1.25 eq) of phosphorus oxychloride to the solution in small amounts, the solution was heated to 70°C and allowed to react for 25 hours. After the completion of the reaction, the solution was cooled at room temperature and further stirred with cooling in ice.

Next, the resulting reaction solution was adjusted to have a pH of 9 by adding thereto an aqueous lithium hydroxide solution, and the reaction solution was subsequently heated to remove the solvent under reduced pressure at 80°C. After the solvent removal, the resultant was filtered and then washed with water to obtain a pale yellow solid. The thus obtained compound was dried for 4 hours at 110°C under vacuum, whereby 9.66 g of a desired Compound 6 was obtained. This Compound 6 was identified by measuring $^{1}$H-NMR and $^{31}$P-NMR. The identification results are shown below.

<Identification Results of Compound 6>

$^{1}$H-NMR (400 MHz, DMSO-$d_6$): $\delta$= 6.97 (s, 2H), 6.84 (s, 2H), 3.80 (s, 2H), 2,29 (m, 4H), 2.20 (s, 6H), 1.53-1.45

(m, 8H), 1.45-1.27 (m, 8H), 1.27 (s, 6H)
$^{31}$P-NMR (400 MHz, DMSO-$d_6$): $\delta$ = -10.44 (s, 1P)

[Production Example 7]

<Production of Compound 7 (hydroxy-2,10-dimethyl-4,8-bis(1-methylcyclohexyl)-12*H*-dibenzo[*d*,*g*][1,3,2]dioxaphosphoc in-6-oleate-6-oxide)>

First, 3.30 g (0.006 mol) of (potassium-2,10-dimethyl-4,8-bis(1-methylcyclohexyl)-12*H*-dibenzo[*d*,*g*][1,3,2]dioxaphosph ocin-6-oleate-6-oxide) was dissolved in a mixture of 40 g (1.24 mol) of methanol and 10 g (0.56 mol) of purified water. Then, the resulting reaction solution was adjusted to have a pH of 4 by adding thereto aqueous hydrochloric acid in small amounts and, when 50 g (2.80 mol) of purified water was further added to the resultant, a pale orange precipitate was immediately formed. The precipitate was recovered by filtration and subsequently washed with water to obtain a pale orange solid. The thus obtained compound was dried for 4 hours at 110°C under vacuum, whereby 2.91 g of a desired Compound 7 was obtained. This Compound 7 was identified by measuring $^{1}$H-NMR and $^{31}$P-NMR.

[Production Example 8]

<Production of Compound 8 (aluminum hydroxy-bis(2,10-dimethyl-4,8-bis(1-methylcyclohexyl)-12*H*-dibenzo[*d*,*g*][1,3,2]dioxaphosp hocin-6-oleate-6-oxide)>

First, 3.00 g (0.006 mol) of (sodium-2,10-dimethyl-4,8-bis(1-methylcyclohexyl)-12*H*-dibenzo[*d*,*g*][1,3,2]dioxaphosphoci n-6-oleate-6-oxide) was dissolved in 10 g (0.31 mol) of methanol. Then, to the resulting reaction solution, 0.16 g (0.003 mol) of sodium bicarbonate dissolved in 10 g (0.56 mol) of purified water was added. Subsequently, when 0.37 g (0.003 mol) of aluminum chloride hexahydrate dissolved in 20 g (1.12 mol) of purified water was added to the reaction solution, a pale orange precipitate was immediately formed. The precipitate was recovered by filtration and subsequently washed with water to obtain a pale orange solid. The thus obtained compound was dried for 4 hours at 110°C under vacuum, whereby 2.86 g of a desired Compound 8 was obtained. This Compound 8 was identified by measuring $^{1}$H-NMR and $^{31}$P-NMR.

[Production Example 9]

<Production of Compound 9 (zirconium oxide-bis(2,10-dimethyl-4,8-bis(1-methylcyclohexyl)-12*H*-dibenzo[*d*,*g*][1,3,2]dioxaphosphoc in-6-oleate-6-oxide)>

First, 3.00 g (0.006 mol) of (sodium-2,10-dimethyl-4,8-bis(1-methylcyclohexyl)-12*H*-dibenzo[*d*,*g*][1,3,2]dioxaphosphoci n-6-oleate-6-oxide) was dissolved in 10 g (0.31 mol) of methanol. Then, when 0.35 g (0.003 mol) of zirconium oxyacetate dissolved in 20 g (1.12 mol) of purified water was added to the resulting reaction solution, a pale orange precipitate was immediately formed. The precipitate was recovered by filtration and subsequently washed with water to obtain a pale orange solid. The thus obtained compound was dried for 4 hours at 110°C under vacuum, whereby 2.76 g of a desired Compound 9 was obtained. This Compound 9 was identified by measuring $^{1}$H-NMR and $^{31}$P-NMR.

[Production Example 10]

<Production of Compound 10 (zinc-bis(2,10-dimethyl-4,8-bis(1-methylcyclohexyl)-12*H*-dibenzo[*d*,*g*][1,3,2]dioxaphosphoci n-6-oleate-6-oxide))>

First, 3.00 g (0.006 mol) of (sodium-2,10-dimethyl-4,8-bis(1-methylcyclohexyl)-12*H*-dibenzo[*d*,*g*][1,3,2]dioxaphosphoci n-6-oleate-6-oxide) was dissolved in 10 g (0.31 mol) of methanol. Then, when 0.22 g (0.003 mol) of zinc chloride dissolved in 20 g (1.12 mol) of purified water was added to the resulting reaction solution, a pale orange precipitate was immediately formed. The precipitate was recovered by filtration and subsequently washed with water to obtain a pale orange solid. The thus obtained compound was dried for 4 hours at 110°C under vacuum, whereby 2.61 g of a desired Compound 10 was obtained. This Compound 10 was identified by measuring $^{1}$H-NMR and $^{31}$P-NMR.

[Production Example 11]

<Production of Compound 11 (calcium-bis(2,10-dimethyl-4,8-bis(1-methylcyclohexyl)-12*H*-dibenzo[*d*,*g*][1,3,2]dioxaphosp hocin-6-oleate-6-oxide)>

First, 3.00 g (0.006 mol) of (sodium-2,10-dimethyl-4,8-bis(1-methylcyclohexyl)-12*H*-dibenzo[*d*,*g*][1,3,2]dioxaphosphoci n-6-oleate-6-oxide) was dissolved in 10 g (0.31 mol) of methanol. Then, when 0.17 g (0.003 mol) of calcium chloride dissolved in 20 g (1.12 mol) of purified water was added to the resulting reaction solution, an aggregate was immediately formed. To this aggregate, 70 g (3.89 mol) of purified water was added, and the resultant was stirred at room temperature for 5 hours to disperse the aggregate. The thus dispersed aggregate was recovered by filtration and subsequently washed with water to obtain a pale orange solid. The thus obtained compound was dried for 4 hours at 110°C under vacuum, whereby 2.53 g of a desired Compound 11 was obtained. This Compound 11 was identified by measuring $^{1}$H-NMR and $^{31}$P-NMR.

[Production Example 12]

<Production of Compound 12 (magnesium-bis(2,10-dimethyl-4,8-bis(1-methylcyclohexyl)-12*H*-dibenzo[*d*,*g*][1,3,2]dioxaph osphocin-6-oleate-6-oxide)>

First, 3.00 g (0.006 mol) of (sodium-2,10-dimethyl-4,8-bis(1-methylcyclohexyl)-12*H*-dibenzo[*d*,*g*][1,3,2]dioxaphosphoci n-6-oleate-6-oxide) was dissolved in 10 g (0.31 mol) of methanol. Then, when 0.19 g (0.003 mol) of magnesium sulfate dissolved in 20 g (1.12 mol) of purified water was added to the resulting reaction solution, an aggregate was immediately formed. To this aggregate, 100 g (5.55 mol) of purified water was added, and the resultant was stirred at room temperature for 6 hours to disperse the aggregate. The thus dispersed aggregate was recovered by filtration and subsequently washed with water to obtain a pale orange solid. The thus obtained compound was dried for 4 hours at 110°C under vacuum, whereby 2.48 g of a desired Compound 12 was obtained. This Compound 12 was identified by measuring $^{1}$H-NMR and $^{31}$P-NMR.

[Production Example 13]

<Production of Compound 13 (copper-bis(2,10-dimethyl-4,8-bis(1-methylcyclohexyl)-12*H*-dibenzo[*d*,*g*][1,3,2]dioxaphosph ocin-6-oleate-6-oxide)>

First, 3.00 g (0.006 mol) of (sodium-2,10-dimethyl-4,8-bis(1-methylcyclohexyl)-12*H*-dibenzo[*d*,*g*][1,3,2]dioxaphosphoci n-6-oleate-6-oxide) was dissolved in 10 g (0.31 mol) of methanol. Then, when 0.20 g (0.003 mol) of copper chloride dissolved in 20 g (1.12 mol) of purified water was added to the resulting reaction solution, a precipitate was immediately formed. After stirring the resultant at room temperature for 2 hours, the precipitate was recovered by filtration and subsequently washed with water to obtain a light blue solid. The thus obtained compound was dried for 4 hours at 110°C under vacuum, whereby 2.90 g of a desired Compound 13 was obtained. This Compound 13 was identified by measuring $^{1}$H-NMR and $^{31}$P-NMR.

[Production Example 14]

<Production of Compound 14 (manganese-bis(2,10-dimethyl-4,8-bis(1-methylcyclohexyl)-12*H*-dibenzo[*d*,*g*][1,3,2]dioxaph osphocin-6-oleate-6-oxide)>

First, 3.00 g (0.006 mol) of (sodium-2,10-dimethyl-4,8-bis(1-methylcyclohexyl)-12*H*-dibenzo[*d*,*g*][1,3,2]dioxaphosphoci n-6-oleate-6-oxide) was dissolved in 10 g (0.31 mol) of methanol. Then, when 0.37 g (0.003 mol) of manganese acetate tetrahydrate dissolved in 20 g (1.12 mol) of purified water was added to the resulting reaction solution, a precipitate was immediately formed. After stirring the resultant at room temperature for 2 hours, the precipitate was recovered by filtration and subsequently washed with water to obtain a pale orange solid. The thus obtained compound was dried for 4 hours at 110°C under vacuum, whereby 2.42 g of a desired Compound 14 was obtained. This Compound 14 was identified by measuring $^{1}$H-NMR and $^{31}$P-NMR.

[Production Example 15]

<Production of Compound 15 (nickel-bis(2,10-dimethyl-4,8-bis(1-methylcyclohexyl)-12*H*-dibenzo[*d*,*g*][1,3,2]dioxaphospho cin-6-oleate-6-oxide)>

First, 3.00 g (0.006 mol) of (sodium-2,10-dimethyl-4,8-bis(1-methylcyclohexyl)-12*H*-dibenzo[*d*,*g*][1,3,2]dioxaphosphoci n-6-oleate-6-oxide) was dissolved in 10 g (0.31 mol) of methanol. Then, when 0.20 g (0.003 mol) of nickel chloride dissolved in 20 g (1.12 mol) of purified water was added to the resulting reaction solution, a precipitate was immediately formed. After stirring the resultant at room temperature for 2 hours, the precipitate was recovered by filtration and subsequently washed with water to obtain a pale yellow-green solid. The thus obtained compound was dried for 4 hours at 110°C under vacuum, whereby 2.79 g of a desired Compound 15 was obtained. This Compound 15 was identified by measuring $^{1}H$-NMR and $^{31}P$-NMR.

[Production Example 16]

<Production of Compound 16 (cobalt-bis(2,10-dimethyl-4,8-bis(1-methylcyclohexyl)-12*H*-dibenzo[*d*,*g*][1,3,2]dioxaphospho cin-6-oleate-6-oxide)>

First, 3.00 g (0.006 mol) of (sodium-2,10-dimethyl-4,8-bis(1-methylcyclohexyl)-12*H*-dibenzo[*d*,*g*][1,3,2]dioxaphosphoci n-6-oleate-6-oxide) was dissolved in 10 g (0.31 mol) of methanol. Then, when 0.38 g (0.003 mol) of cobalt acetate dissolved in 40 g (2.24 mol) of purified water was added to the resulting reaction solution, a precipitate was immediately formed. After stirring the resultant at room temperature for 2 hours, the precipitate was recovered by filtration and subsequently washed with water to obtain a pale purple solid. The thus obtained compound was dried for 4 hours at 110°C under vacuum, whereby 2.48 g of a desired Compound 16 was obtained. This Compound 16 was identified by measuring $^{1}H$-NMR and $^{31}P$-NMR.

[Production Example 17]

<Production of Compound 17 (chromium hydroxy-bis(2,10-dimethyl-4,8-bis(1-methylcyclohexyl)-12*H*-dibenzo[*d*,*g*][1,3,2]dioxaphosp hocin-6-oleate-6-oxide)>

First, 3.00 g (0.006 mol) of (sodium-2,10-dimethyl-4,8-bis(1-methylcyclohexyl)-12*H*-dibenzo[*d*,*g*][1,3,2]dioxaphosphoci n-6-oleate-6-oxide) was dissolved in 10 g (0.31 mol) of methanol. Then, to the resulting reaction solution, 0.16 g (0.003 mol) of sodium bicarbonate dissolved in 10 g (0.56 mol) of purified water was added. Subsequently, when 0.40 g (0.003 mol) of chromium chloride hexahydrate dissolved in 20 g (1.12 mol) of purified water was added to the reaction solution, a precipitate was immediately formed. After stirring the resultant at room temperature for 2 hours, the precipitate was recovered by filtration and subsequently washed with water to obtain a dark blue-green solid. The thus obtained compound was dried for 4 hours at 110°C under vacuum, whereby 2.96 g of a desired Compound 17 was obtained. This Compound 17 was identified by measuring $^{1}H$-NMR and $^{31}P$-NMR.

[Production Example 18]

<Production of Compound 18 (ammonium-bis(2,10-dimethyl-4,8-bis(1-methylcyclohexyl)-12*H*-dibenzo[*d*,*g*][1,3,2]dioxaph osphocin-6-oleate-6-oxide)>

First, 3.00 g (0.006 mol) of (hydroxy-2,10-dimethyl-4,8-bis(1-methylcyclohexyl)-12*H*-dibenzo[*d*,*g*][1,3,2]dioxaphosphoc in-6-oleate-6-oxide) was dissolved in 10 g (0.31 mol) of methanol. Then, 0.42 g (0.024 mol) of 25% aqueous ammonia was added to the resulting reaction solution and, after stirring the resultant at room temperature for 2 hours, the solvent was distilled off to obtain a pale orange solid. The thus obtained compound was dried for 4 hours at 110°C under vacuum, whereby 3.05 g of a desired Compound 18 was obtained. This Compound 18 was identified by measuring $^{1}H$-NMR and $^{31}P$-NMR.

[Production Example 19]

<Production of Compound 19 (lanthanum hydroxy-bis(2,10-dimethyl-4,8-bis(1-methylcyclohexyl)-12*H*-dibenzo[*d*,*g*][1,3,2]dioxaphosp hocin-6-oleate-6-oxide)>

First, 3.00 g (0.006 mol) of (sodium-2,10-dimethyl-4,8-bis(1-methylcyclohexyl)-12*H*-dibenzo[*d*,*g*][1,3,2]dioxaphosphoci n-6-oleate-6-oxide) was dissolved in 10 g (0.31 mol) of methanol. Then, to the resulting reaction solution, 0.16 g (0.003 mol) of sodium bicarbonate dissolved in 10 g (0.56 mol) of purified water was added. Subsequently, when 0.56 g (0.003 mol) of lanthanum chloride heptahydrate dissolved in 20 g (1.12 mol) of purified water was added to the reaction solution, a precipitate was immediately formed. After stirring the resultant at room temperature for 2 hours, the precipitate was recovered by filtration and subsequently washed with water to obtain a pale orange solid. The thus obtained compound was dried for 4 hours at 110°C under vacuum, whereby 3.30 g of a desired Compound 19 was obtained. This Compound 19 was identified by measuring $^{1}H$-NMR and $^{31}P$-NMR.

[Production Example 20]

<Production of Compound 20 (cerium hydroxy-bis(2,10-dimethyl-4,8-bis(1-methylcyclohexyl)-12*H*-dibenzo[*d*,*g*][1,3,2]dioxaphosp hocin-6-oleate-6-oxide)>

First, 3.00 g (0.006 mol) of (sodium-2,10-dimethyl-4,8-bis(1-methylcyclohexyl)-12*H*-dibenzo[*d*,*g*][1,3,2]dioxaphosphoci n-6-oleate-6-oxide) was dissolved in 10 g (0.31 mol) of methanol. Then, to the resulting reaction solution, 0.16 g (0.003 mol) of sodium bicarbonate dissolved in 10 g (0.56 mol) of purified water was added. Subsequently, when 0.57 g (0.003 mol) of cerium chloride heptahydrate dissolved in 20 g (1.12 mol) of purified water was added to the reaction solution, a precipitate was immediately formed. After stirring the resultant at room temperature for 2 hours, the precipitate was recovered by filtration and subsequently washed with water to obtain a pale orange solid. The thus obtained compound was dried for 4 hours at 110°C under vacuum, whereby 3.30 g of a desired Compound 20 was obtained. This Compound 20 was identified by measuring $^{1}H$-NMR and $^{31}P$-NMR.

[Production Example 21]

<Production of Compound 21 (neodymium hydroxy-bis(2,10-dimethyl-4,8-bis(1-methylcyclohexyl)-12*H*-dibenzo[*d*,*g*][1,3,2]dioxaphosp hocin-6-oleate-6-oxide)>

First, 3.00 g (0.006 mol) of (sodium-2,10-dimethyl-4,8-bis(1-methylcyclohexyl)-12*H*-dibenzo[*d*,*g*][1,3,2]dioxaphosphoci n-6-oleate-6-oxide) was dissolved in 10 g (0.31 mol) of methanol. Then, to the resulting reaction solution, 0.16 g (0.003 mol) of sodium bicarbonate dissolved in 10 g (0.56 mol) of purified water was added. Subsequently, when 0.54 g (0.003 mol) of neodymium chloride hexahydrate dissolved in 20 g (1.12 mol) of purified water was added to the reaction solution, a precipitate was immediately formed. After stirring the resultant at room temperature for 2 hours, the precipitate was recovered by filtration and subsequently washed with water to obtain a pale orange solid. The thus obtained compound was dried for 4 hours at 110°C under vacuum, whereby 3.31 g of a desired Compound 21 was obtained. This Compound 21 was identified by measuring $^{1}H$-NMR and $^{31}P$-NMR.

[Production Example 22]

<Production of Compound 22 (praseodymium hydroxy-bis(2,10-dimethyl-4,8-bis(1-methylcyclohexyl)-12*H*-dibenzo[*d*,*g*][1,3,2]dioxaphosp hocin-6-oleate-6-oxide)>

First, 3.00 g (0.006 mol) of (sodium-2,10-dimethyl-4,8-bis(1-methylcyclohexyl)-12*H*-dibenzo[*d*,*g*][1,3,2]dioxaphosphoci n-6-oleate-6-oxide) was dissolved in 10 g (0.31 mol) of methanol. Then, to the resulting reaction solution, 0.16 g (0.003 mol) of sodium bicarbonate dissolved in 10 g (0.56 mol) of purified water was added. Subsequently, when 0.57 g (0.003 mol) of praseodymium chloride heptahydrate dissolved in 20 g (1.12 mol) of purified water was added to the reaction solution, a precipitate was immediately formed. After stirring the resultant at room temperature for 2 hours, the precipitate was recovered by filtration and subsequently washed with water to obtain a pale orange solid. The thus obtained compound was dried for 4 hours at 110°C under vacuum, whereby 3.30 g of a desired Compound 22 was obtained. This Compound 22 was identified by measuring $^{1}H$-NMR and $^{31}P$-NMR.

[Production Example 23]

<Production of Compound 23 (sodium-bis(4-*tert*-butyl-2-(1-methylcyclohexyl)phenyl)phosphate)>

First, 7.25 g (0.029 mol) of 2-(1-methylcyclohexyl)-4-*tert*-butylphenol was dissolved in 50 g (0.63 mol) of pyridine, and the resulting solution was stirred with cooling in ice. Subsequently, after adding 2.71 g (0.018 mol, 1.2 eq) of phosphorus oxychloride to the solution in small amounts, the solution was heated to 70°C and allowed to react for 5 hours. After the completion of the reaction, the solution was stirred with cooling in ice.

Next, the resulting reaction solution was adjusted to have a pH of 9 by adding thereto sodium hydroxide, and the reaction solution was subsequently heated to remove the solvent under reduced pressure at 80°C. After the solvent removal, the resultant was filtered and then washed with a water/acetone mixed solvent to obtain a pale orange solid. The thus obtained compound was dried for 4 hours at 110°C under vacuum, whereby 3.12 g of a desired Compound 23 was obtained. This Compound 23 was identified by measuring $^{1}$H-NMR and $^{31}$P-NMR. The identification results are shown below.

<Identification Results of Compound 23>

$^{1}$H-NMR (400 MHz, DMSO-d6): $\delta$ = 7.46 (d, 2H), 7.17 (d, 2H), 6.94 (dd, 2H), 2.16-2.11 (m, 4H), 1.62-1.59 (m, 4H), 1.58-1.41 (m, 4H), 1.40-1.36 (m, 8H), 1.25 (s, 24H)
$^{31}$P-NMR (400 MHz, DMSO-d6): $\delta$ = -15.71 (s, 1P)

[Comparative Production Example 1]

<Production of Comparative Compound 1 (potassium-2,10-dimethyl-4,8-bis(1-methylcyclohexyl)-12*H*-dibenzo[*d*,*g*][1,3,2]dioxaphosph ocin-6-oleate-6-oxide)>

First, 9.00 g (0.021 mol) of 2,2'-methylene-bis(6-(1-methylcyclohexyl)-*p*-cresol) was dissolved in 50 g (0.63 mol) of pyridine, and the resulting solution was stirred with cooling in ice. Subsequently, after adding 4.11 g (0.027 mol, 1.25 eq) of phosphorus oxychloride to the solution in small amounts, the solution was heated to 70°C and allowed to react for 21 hours. After the completion of the reaction, the solution was cooled at room temperature and further stirred with cooling in ice.

Next, the resulting reaction solution was adjusted to have a pH of 9 by adding thereto an aqueous potassium hydroxide solution, and the reaction solution was subsequently heated to remove the solvent under reduced pressure at 80°C. After the solvent removal, the resultant was filtered and then washed with water to obtain a pale yellow solid. The thus obtained compound was dried for 4 hours at 110°C under vacuum, whereby 10.52 g of a desired Comparative Compound 1 was obtained. This Comparative Compound 1 was identified by measuring $^{1}$H-NMR and $^{31}$P-NMR. The identification results are shown below.

<Identification Results of Comparative Compound 1>

$^{1}$H-NMR (400 MHz, DMSO-$d_6$): $\delta$ = 6.97 (s, 2H), 6.84 (s, 2H), 3.80 (s, 2H), 2.29 (m, 4H), 2.20 (s, 6H), 1.53-1.45 (m, 8H), 1.45-1.27 (m, 8H), 1.27 (s, 6H)
$^{31}$P-NMR (400 MHz, DMSO-$d_6$): $\delta$ = -10.44 (s, 1P)

[Examples 1-1 to 1-8 and Comparative Examples 1-1 to 1-5]

With respect to 100 parts by mass of a homopolypropylene resin having a melt flow rate of 8 g/10 min at 230°C, 0.05 parts by mass of a phenolic antioxidant (manufactured by ADEKA Corporation, trade name "ADK STAB AO-60"), 0.1 parts by mass of a phosphorus-based antioxidant (manufactured by ADEKA Corporation, trade name "ADK STAB 2112"), 0.05 parts by mass of a neutralizer (calcium stearate) and the respective compounds in the amounts shown in Table 1 were added and mixed, and the resulting mixtures were each melt-kneaded and granulated using a biaxial extruder (TEX28V manufactured by The Japan Steel Works, Ltd., extrusion temperature: 230°C, screw rotation speed: 150 rpm). It is noted here that the granulation was performed without adding any compound in Comparative Example 1-1. The thus granulated pellets were dried at 60°C for 8 hours, and the Izod impact strength and the crystallization temperature of each pellet were subsequently evaluated. The results thereof are also shown in Table 1.

<Izod Impact Strength>

Using an injection molding machine (EC100-2A, manufactured by Toshiba Machine Co., Ltd.), the thus obtained pellets were each injection-molded at a resin temperature of 200°C and a mold temperature of 50°C to prepare test pieces having dimensions of 80 mm × 10 mm × 4 mm and, after leaving the thus obtained test pieces to stand for at least 48 hours in an incubator at 23°C, the Izod impact strength (J/m) was evaluated in accordance with ISO180.

<Crystallization Temperature>

After cutting each of the thus obtained pellets into small pieces, 5 mg thereof was weighed and placed on an

aluminum pan, and the crystallization temperature was measured using a differential scanning calorimeter (DIAMOND, manufactured by PerkinElmer Co., Ltd.). The measurement was performed by heating the small pieces of each pellet to 230°C at a rate of 50°C/min, maintaining them for 5 minutes and then cooling them to 50°C at a rate of 10°C/min, and the temperature of an exothermic peak appearing in this process was defined as the crystallization temperature.

[Table 1]

| | Compound | Added amount [parts by mass] | Izod impact strength [J/m] | Crystallization temperature [°C] |
|---|---|---|---|---|
| Example 1-1 | Compound 1 | 0.1 | 71.9 | 122.7 |
| Example 1-2 | Compound 2 | 0.1 | 22.4 | 124.1 |
| Example 1-3 | Compound 3 | 0.1 | 28.2 | 119.7 |
| Example 1-4 | Compound 4 | 0.1 | 22.4 | 120.0 |
| Example 1-5 | Compound 5 | 0.1 | 23.2 | 130.5 |
| Example 1-6 | Compound 6 | 0.1 | 25.5 | 117.3 |
| Example 1-7 | Compound 1 | 0.2 | 66.8 | 123.1 |
| Example 1-8 | Compound 1 Na-St | 0.13 0.07 | 82.4 | 123.4 |
| Comparative Example 1-1 | Control | - | 20.2 | 112.0 |
| Comparative Example 1-2 | Comparative Compound 1 | 0.1 | 21.6 | 119.6 |
| Comparative Example 1-3 | HPN-20E | 0.05 | 20.0 | 126.1 |
| Comparative Example 1-4 | HPN-20E | 0.1 | 19.8 | 126.5 |
| Comparative Example 1-5 | NA-11 | 0.1 | 18.5 | 130.5 |

Compound 1: sodium-2,10-dimethyl-4,8-bis(1-methylcyclohexyl)-12*H*-dibenzo[*d*,*g*][1,3,2]dioxaphosphocin -6-oleate-6-oxide

Compound 2: sodium-bis(4-cyclohexylphenyl)phosphate

Compound 3: sodium-2,10-dicyclo-12*H*-dibenzo[*d*,*g*][1,3,2]dioxaphosphocin-6-oleate-6-oxide

Compound 4: sodium-bis(5,6,7,8-tetrahydronaphthalene-2-yl)phosphate

Compound 5: sodium-2,10-dimethyl-4,8-dicyclohexyl-12*H*-dibenzo[*d*,*g*][1,3,2]dioxaphosphocin-6-oleate-6-oxide

Compound 6: lithium-2,10-dimethyl-4,8-bis(1-methylcyclohexyl)-12*H*-dibenzo[*d*,*g*][1,3,2]dioxaphosphocin -6-oleate-6-oxide
Na-St: sodium stearate
LIM: lithium myristate

Comparative Compound 1: potassium-2,10-dimethyl-4,8-bis(1-methylcyclohexyl)-12*H*-dibenzo[*d*,*g*][1,3,2]dioxaphospho cin-6-oleate-6-oxide
HPN-20E: manufactured by Milliken & Company, trade name "HYPERFORM HPN-20E"
NA-11: sodium-2,2'-methylene-bis(4,6-di-*tert*-butylphenyl)phosphate

[Examples 2-1 to 2-6 and Comparative Examples 2-1 to 2-4]

With respect to 100 parts by mass of a homopolypropylene resin having a melt flow rate of 8 g/10 min at 230°C,

0.05 parts by mass of a phenolic antioxidant (manufactured by ADEKA Corporation, trade name "ADK STAB AO-60"), 0.1 parts by mass of a phosphorus-based antioxidant (manufactured by ADEKA Corporation, trade name "ADK STAB 2112"), 0.05 parts by mass of a neutralizer (calcium stearate) and the respective compounds in the amounts shown in Table 2 were added and mixed, and the resulting mixtures were each melt-kneaded and granulated using a biaxial extruder (TEX28V manufactured by The Japan Steel Works, Ltd., extrusion temperature: 230°C, screw rotation speed: 150 rpm). It is noted here that the granulation was performed without adding any compound in Comparative Example 2-1. The thus granulated pellets were dried at 60°C for 8 hours, and the shrinkage anisotropy of each pellet was subsequently evaluated. The results thereof are also shown in Table 2.

<Shrinkage Anisotropy>

The thus obtained pellets were each injection-molded using an injection molding machine (EC100-2A, manufactured by Toshiba Machine Co., Ltd.) under the conditions of a resin temperature of 200°C, a mold temperature of 50°C and a mold shape of 60 mm (MD direction) × 60 mm (TD direction) × 2 mm (thickness), whereby test pieces were prepared. After leaving the thus obtained test pieces to stand for 48 hours in an incubator having a temperature of 23°C and a humidity of 50%, the dimensions of each test piece in the MD direction (MD1) and the TD direction (TD1) were measured. The shrinkage ratios of each test piece, ΔMD (%) and ΔTD (%), were determined in accordance with the following equations:

$$\Delta MD(\%) = \frac{60 - MD1}{60}$$

$$\Delta TD(\%) = \frac{60 - TD1}{60}$$

The thus determined ΔMD and ΔTD were substituted into the following equation to calculate the shrinkage anisotropy. A higher shrinkage anisotropy leads to a higher degree of deformation of the resulting molded article due to warping and the like. Generally speaking, the close the shrinkage anisotropy is to 1, the less likely are such problems to occur:

$$\text{Shrinkage anisotropy} = \frac{\Delta MD}{\Delta TD}$$

[Table 2]

| | Compound | Added amount [parts by mass] | Shrinkage anisotropy MD/TD |
|---|---|---|---|
| Example 2-1 | Compound 3 | 0.1 | 0.94 |
| Example 2-2 | Compound 4 | 0.1 | 0.88 |
| Example 2-3 | Compound 5 | 0.1 | 0.99 |
| Example 2-4 | Compound 6 | 0.1 | 0.96 |
| Example 2-5 | Compound 1 | 0.2 | 1.12 |
| Example 2-6 | Compound 1<br>LIM | 0.13<br>0.07 | 1.01 |
| Comparative Example 2-1 | Control | - | 0.90 |
| Comparative Example 2-2 | NA-11 | 0.1 | 0.82 |
| Comparative Example 2-3 | HPN-20E | 0.05 | 1.24 |
| Comparative Example 2-4 | HPN-20E | 0.1 | 1.25 |

[Examples 3-1 to 3-24 and Comparative Example 3-1]

With respect to 100 parts by mass of a homopolypropylene resin having a melt flow rate of 8 g/10 min at 230°C, 0.05 parts by mass of a phenolic antioxidant (manufactured by ADEKA Corporation, trade name "ADK STAB AO-60"), 0.1 parts by mass of a phosphorus-based antioxidant (manufactured by ADEKA Corporation, trade name "ADK STAB 2112"), 0.05 parts by mass of a neutralizer (calcium stearate) and the respective compounds in the amounts shown in Tables 3 and 4 were added and mixed, and the resulting mixtures were each melt-kneaded and granulated using a biaxial extruder (TEX28V manufactured by The Japan Steel Works, Ltd., extrusion temperature: 230°C, screw rotation speed: 150 rpm). It is noted here that the granulation was performed without adding any compound in Comparative Example 3-1. The thus granulated pellets were dried at 60°C for 8 hours, and the Izod impact strength, the HDT (heat deflection temperature under load), the flexural modulus and the crystallization temperature of each pellet were subsequently evaluated. The results thereof are also shown in Tables 3 and 4. The Izod impact strength and the crystallization temperature were evaluated in the same manner as in Examples 1-1 to 1-8 and Comparative Examples 1-1 to 1-5.

<HDT (Heat Deflection Temperature)>

Using an injection molding machine (EC100-2A, manufactured by Toshiba Machine Co., Ltd.), the thus obtained pellets were each injection-molded at a resin temperature of 200°C and a mold temperature of 50°C to prepare test pieces having dimensions of 80 mm × 10 mm × 4 mm and, after leaving the thus obtained test pieces to stand for at least 48 hours in an incubator at 23°C, the HDT (°C) was measured by a flat-wise method in accordance with ISO75 (load: 0.45 MPa).

< Flexural modulus >

Using an injection molding machine (EC100-2A, manufactured by Toshiba Machine Co., Ltd.), the thus obtained pellets were each injection-molded at a resin temperature of 200°C and a mold temperature of 50°C to prepare test pieces having dimensions of 80 mm × 10 mm × 4 mm and, after leaving the thus obtained test pieces to stand for at least 48 hours in an incubator at 23°C, the flexural modulus (MPa) was measured using a bending tester "AG-IS" manufactured by Shimadzu Corporation in accordance with ISO178.

[Table 3]

| | Compound | Added amount [parts by mass] | Izod impact strength [J/m] | HDT [°C] | Flexural modulus [MPa] | Crystallization Temperature [°C] |
|---|---|---|---|---|---|---|
| Example 3-1 | Compound 1<br>Na-St | 0.08<br>0.02 | 80.6 | 100.2 | 1,610 | 124.5 |
| Example 3-2 | Compound 1<br>Na-St | 0.05<br>0.05 | 77.5 | 97.2 | 1,520 | 123.8 |
| Example 3-3 | Compound 1<br>Na-St | 0.03<br>0.07 | 74.1 | 95.2 | 1,440 | 123.1 |
| Example 3-4 | Compound 6<br>Na-St | 0.05<br>0.05 | 52.0 | 98.0 | 1,590 | 123.0 |
| Example 3-5 | Compound 7<br>Na-St | 0.05<br>0.05 | 75.9 | 102.1 | 1,650 | 126.1 |
| Example 3-6 | Compound 8<br>Na-St | 0.05<br>0.05 | 77.4 | 100.5 | 1,620 | 124.8 |
| Example 3-7 | Compound 9<br>Na-St | 0.05<br>0.05 | 78.3 | 98.9 | 1,570 | 124.5 |
| Example 3-8 | Compound 10<br>Na-St | 0.05<br>0.05 | 75.9 | 98.9 | 1,560 | 124.5 |
| Example 3-9 | Compound 11<br>Na-St | 0.05<br>0.05 | 73.0 | 101.3 | 1,630 | 124.8 |

(continued)

| | Compound | Added amount [parts by mass] | Izod impact strength [J/m] | HDT [°C] | Flexural modulus [MPa] | Crystallization Temperature [°C] |
|---|---|---|---|---|---|---|
| Example 3-10 | Compound 12<br>Na-St | 0.05<br>0.05 | 69.7 | 98.6 | 1,600 | 124.4 |
| Example 3-11 | Compound 13<br>Na-St | 0.05<br>0.05 | 73.0 | 101.1 | 1,580 | 124.4 |
| Example 3-12 | Compound 14<br>Na-St | 0.05<br>0.05 | 73.2 | 98.8 | 1,570 | 124.5 |

[Table 4]

| | Compound | Added amount [parts by mass] | Izod impact strength [J/m] | HDT [°C] | Flexural modulus [MPa] | Crystallization Temperature [°C] |
|---|---|---|---|---|---|---|
| Example 3-13 | Compound 15<br>Na-St | 0.05<br>0.05 | 74.4 | 101.3 | 1,600 | 124.8 |
| Example 3-14 | Compound 16x<br>Na-St | 0.05<br>0.05 | 73.7 | 98.6 | 1,570 | 124.4 |
| Example 3-15 | Compound 17<br>Na-St | 0.05<br>0.05 | 72.0 | 100.5 | 1,550 | 124.5 |
| Example 3-16 | Compound 18<br>Na-St | 0.05<br>0.05 | 56.2 | 98.0 | 1,580 | 124.0 |
| Example 3-17 | Compound 19<br>Na-St | 0.05<br>0.05 | 68.0 | 97.7 | 1,540 | 124.1 |
| Example 3-18 | Compound 20<br>Na-St | 0.05<br>0.05 | 68.7 | 97.9 | 1,550 | 124.1 |
| Example 3-19 | Compound 21<br>Na-St | 0.05<br>0.05 | 67.7 | 97.6 | 1,560 | 124.1 |
| Example 3-20 | Compound 22<br>Na-St | 0.05<br>0.05 | 67.5 | 97.6 | 1,550 | 124.0 |
| Example 3-21 | Compound 2<br>Na-St | 0.05<br>0.05 | 23.0 | 107.0 | 1,880 | 124.4 |
| Example 3-22 | Compound 5<br>Na-St | 0.05<br>0.05 | 23.6 | 106.6 | 1,890 | 130.3 |

(continued)

| | Compound | Added amount [parts by mass] | Izod impact strength [J/m] | HDT [°C] | Flexural modulus [MPa] | Crystallization Temperature [°C] |
|---|---|---|---|---|---|---|
| Example 3-23 | Compound 23<br>Na-St | 0.08<br>0.02 | 30.7 | 99.6 | 1,670 | 124.0 |
| Example 3-24 | Compound 23 | 0.10 | 30.0 | 101 to 103 | 1,640 | 123.6 |
| Comparative Example 3-1 | None | - | 15.9 | 79.7 | 1,360 | 113.7 |

Compound 7: hydroxy-2,10-dimethyl-4,8-bis(1-methylcyclohexyl)-12*H*-dibenzo[*d*,*g*][1,3,2]dioxaphosphoci n-6-oleate-6-oxide
Compound 8: aluminum hydroxy-bis(2,10-dimethyl-4,8-bis(1-methylcyclohexyl)-12*H*-dibenzo[*d*,*g*][1,3,2]dioxaphosp hocin-6-oleate-6-oxide)
Compound 9: zirconium oxide-bis(2,10-dimethyl-4,8-bis(1-methylcyclohexyl)-12*H*-dibenzo[*d*,*g*][1,3,2]dioxaphosphoc in-6-oleate-6-oxide)
Compound 10: zinc-bis(2,10-dimethyl-4,8-bis(1-methylcyclohexyl)-12*H*-dibenzo[*d*,*g*][1,3,2]dioxaphosphoci n-6-oleate-6-oxide)
Compound 11: calcium-bis(2,10-dimethyl-4,8-bis(1-methylcyclohexyl)-12*H*-dibenzo[*d*,*g*][1,3,2]dioxaphosph ocin-6-oleate-6-oxide)
Compound 12: magnesium-bis(2,10-dimethyl-4,8-bis(1-methylcyclohexyl)-12*H*-dibenzo[*d*,*g*][1,3,2]dioxapho sphocin-6-oleate-6-oxide
Compound 13: copper-bis(2,10-dimethyl-4,8-bis(1-methylcyclohexyl)-12*H*-dibenzo[*d*,*g*][1,3,2]dioxaphospho cin-6-oleate-6-oxide)
Compound 14: manganese-bis(2,10-dimethyl-4,8-bis(1-methylcyclohexyl)-12*H*-dibenzo[*d*,*g*][1,3,2]dioxapho sphocin-6-oleate-6-oxide)
Compound 15: nickel-bis(2,10-dimethyl-4,8-bis(1-methylcyclohexyl)-12*H*-dibenzo[*d*,*g*][1,3,2]dioxaphospho cin-6-oleate-6-oxide)
Compound 16: cobalt-bis(2,10-dimethyl-4,8-bis(1-methylcyclohexyl)-12*H*-dibenzo[*d*,*g*][1,3,2]dioxaphospho cin-6-oleate-6-oxide)
Compound 17: chromium hydroxy-bis(2,10-dimethyl-4,8-bis(1-methylcyclohexyl)-12*H*-dibenzo[*d*,*g*][1,3,2]dioxaphosp hocin-6-oleate-6-oxide)
Compound 18: ammonium-bis(2,10-dimethyl-4,8-bis(1-methylcyclohexyl)-12*H*-dibenzo[*d*,*g*][1,3,2]dioxapho sphocin-6-oleate-6-oxide)
Compound 19: lanthanum hydroxy-bis(2,10-dimethyl-4,8-bis(1-methylcyclohexyl)-12*H*-dibenzo[*d*,*g*][1,3,2]dioxaphosp hocin-6-oleate-6-oxide)
Compound 20: cerium hydroxy-bis(2,10-dimethyl-4,8-bis(1-methylcyclohexyl)-12*H*-dibenzo[*d*,*g*][1,3,2]dioxaphosp hocin-6-oleate-6-oxide)
Compound 21: neodymium hydroxy-bis(2,10-dimethyl-4,8-bis(1-methylcyclohexyl)-12*H*-dibenzo[*d*,*g*][1,3,2]dioxaphosp hocin-6-oleate-6-oxide)
Compound 22: praseodymium hydroxy-bis(2,10-dimethyl-4,8-bis(1-methylcyclohexyl)-12*H*-dibenzo[*d*,*g*][1,3,2]dioxaphosp hocin-6-oleate-6-oxide)
Compound 23: sodium-bis(4-*tert*-butyl-2-(1-methylcyclohexyl)phenyl)phosphate

According to Comparative Example 1-2 shown in Table 1, the crystallization temperature and the Izod impact strength were improved only slightly in the olefin-based resin composition in which a compound having the same structure as Compound 1, except that the compound was a potassium salt, was incorporated. According to Comparative Examples 1-3 to 1-5, when an existing nucleating agent was incorporated, the Izod impact strength was reduced as compared to the molded article of Comparative Example 1-1.

On the other hand, it was confirmed that the olefin-based resin compositions containing the compound of the present invention had not only an improved crystallization temperature but also an improved Izod impact strength. Particularly, according to Example 1-1, the olefin-based resin composition in which Compound 1 was incorporated exhibited a notably high Izod impact strength. Further, from Examples 2-1 to 2-4, the molded articles of the olefin-based

resin compositions containing the compounds of the present invention were confirmed to have low anisotropy. From Example 2-6, it was confirmed that the shrinkage anisotropy was largely reduced by the use of a fatty acid metal salt, especially a lithium salt, in combination.

Moreover, by comparisons between Examples 3-1 to 3-3 shown in Table 3 and Example 1-1 shown in Table 1 as well as between Example 3-4 shown in Table 3 and Example 1-6 shown in Table 1, it was confirmed that the Izod impact strength was further improved by using the compound of the present invention and a fatty acid metal salt in combination. From Examples 3-4 to 3-24, various metal salt compounds were also confirmed to attain the effects of the present invention. In addition, it was confirmed that, as in the cases of Examples 3-21 to 3-24, the Izod impact strength could also be improved while markedly improving the physical properties of molded articles.

The compound of the present invention is particularly suitable as a nucleating agent for polyolefin-based resins that is capable of not only improving the physical properties such as crystallization temperature and flexural modulus, but also improving the impact resistance, in the automobile material applications, housing material applications, mechanism components and the like.

## Claims

**1.** A compound (A) represented by the following Formula (1):

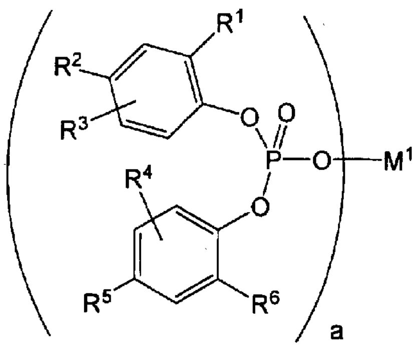

(1)

,

where $R^1$ to $R^6$ each independently represent a hydrogen atom, a halogen atom, an alkyl group having 1 to 10 carbon atoms, or a cycloalkyl group having 3 to 20 carbon atoms; $R^1$ and $R^6$ are optionally linked together to form a methylene bridge; $R^2$ and $R^3$ and/or $R^4$ and $R^5$ are optionally linked together to form a fused ring with a benzene ring; at least one of $R^1$ to $R^6$ represents a halogen atom or a cycloalkyl group, or forms a fused ring; a represents 1 to 3; and $M^1$ represents a hydrogen atom, sodium, lithium, an alkaline earth metal atom, a transition metal atom, a base metal atom, a polyvalent metal inorganic group, an ammonium group, a sulfonium group, or a lanthanoid.

**2.** The compound according to claim 1, which is represented by the following Formula (2):

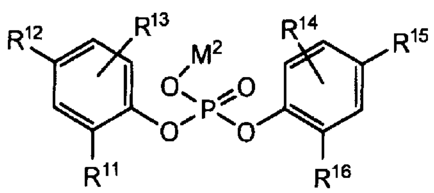

(2)

,

where $M^2$ represents a hydrogen atom, sodium, or lithium; $R^{11}$ to $R^{16}$ each independently represent a hydrogen atom, a halogen atom, an alkyl group having 1 to 10 carbon atoms, or a cycloalkyl group having 3 to 20 carbon atoms; $R^{11}$ and $R^{16}$ are optionally linked together to form a methylene bridge; $R^{12}$ and $R^{13}$ and/or $R^{14}$ and $R^{15}$ are optionally linked together to form a fused ring with a benzene ring; and at least one of $R^{11}$ to $R^{16}$ represents a halogen atom or a cycloalkyl group, or forms a fused ring.

**3.** The compound according to claim 1, which is represented by the following Formula (3):

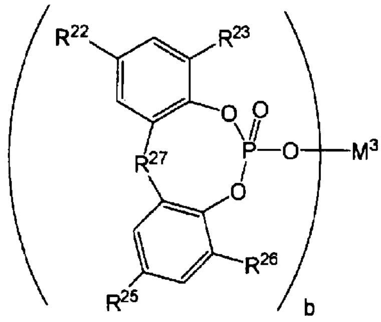

(3)

,

where $R^{22}$, $R^{23}$, $R^{25}$ and $R^{26}$ each independently represent a hydrogen atom, a halogen atom, or a cycloalkyl group having 3 to 20 carbon atoms; $R^{27}$ represents methylene or 1-methylmethylene; at least one of $R^{22}$, $R^{23}$, $R^{25}$ and $R^{26}$ represents a halogen atom or a cycloalkyl group; b represents 1 or 2; $M^3$ represents a hydrogen atom, sodium, lithium, an alkaline earth metal atom, a transition metal atom, a base metal atom, a polyvalent metal inorganic group, an ammonium group, a sulfonium group, or a lanthanoid.

**4.** The compound according to claim 1, wherein, in the Formula (1), $R^1$ and $R^6$ are linked together to form a methylene bridge, and $R^3$ and $R^4$ or $R^2$ and $R^5$ are cyclohexyl or 1-methylcyclohexyl.

**5.** The compound according to claim 1, wherein, in the Formula (1), $R^1$ and $R^6$ are linked together to form a methylene bridge, and $R^3$ and $R^4$ are both 1-methylcyclohexyl.

**6.** A composition comprising the compound according to any one of claims 1 to 5.

**7.** The composition according to claim 6, further comprising (B) a fatty acid metal salt represented by the following Formula (4):

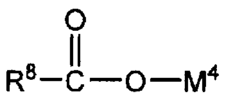

(4)

,

where $R^8$ represents a group introduced from an aliphatic organic acid having 10 to 30 carbon atoms; and $M^4$ represents an alkali metal atom.

**8.** The composition according to claim 7, wherein a ratio of the (A) compound represented by the Formula (1) and the (B) fatty acid metal salt represented by the Formula (4), (A)/(B), is 9/1 to 1/9 in terms of mass ratio.

**9.** An olefin-based resin composition comprising the composition according to any one of claims 6 to 8 such that the content of the (A) compound represented by the Formula (1) is 0.001 to 20 parts by mass with respect to 100 parts by mass of an olefin-based resin.

**10.** A molded article comprising the olefin-based resin composition according to claim 9.

**11.** A method of improving the impact resistance of an olefin resin-containing molded article, the method using (A) a compound represented by the following Formula (1) for improving the impact resistance of the olefin resin-containing molded article:

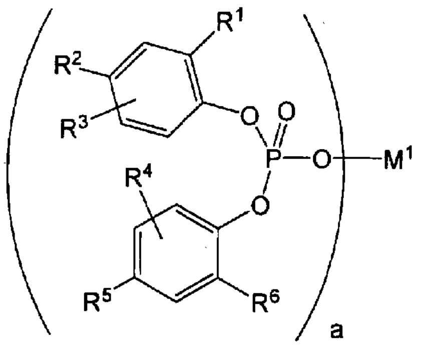

(1)

,

where $R^1$ to $R^6$ each independently represent a hydrogen atom, a halogen atom, an alkyl group having 1 to 10 carbon atoms, or a cycloalkyl group having 3 to 20 carbon atoms; $R^1$ and $R^6$ are optionally linked together to form a methylene bridge; $R^2$ and $R^3$ and/or $R^4$ and $R^5$ are optionally linked together to form a fused ring with a benzene ring; at least one of $R^1$ to $R^6$ represents a halogen atom or a cycloalkyl group, or forms a fused ring; a represents 1 to 3; and $M^1$ represents a hydrogen atom, sodium, lithium, an alkaline earth metal atom, a transition metal atom, a base metal atom, a polyvalent metal inorganic group, an ammonium group, a sulfonium group, or a lanthanoid.

| INTERNATIONAL SEARCH REPORT | International application No. PCT/JP2017/038567 |
|---|---|

**A. CLASSIFICATION OF SUBJECT MATTER**

Int.Cl. C07F9/09(2006.01)i, C07F9/6574(2006.01)i, C08K5/521(2006.01)i, C08L23/00(2006.01)i

According to International Patent Classification (IPC) or to both national classification and IPC

**B. FIELDS SEARCHED**

Minimum documentation searched (classification system followed by classification symbols)
Int.Cl. C07F9/09, C07F9/6574, C08K5/521, C08L23/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 63-309554 A (BAYER AG.) 16 December 1988, claim 1, page 3, upper right column, line 5 to lower right column, line 3 from the bottom, example 3 (3c) in example I, example 2 (2c) in example II, example 1 (1b) in example III, example 2 (2c) & US 5064885 A, claims 1-5, example 3 (3c) in example I, example 2 (2c) in example II, example 1 (1b) in example III, example 2 (2c) & EP 292786 A2 | 1-4, 6, 9, 10,<br>5, 7, 8, 11 |
| X<br>Y | JP 53-105550 A (ADEKA ARGUS KAGAKU KABUSHIKI KAISHA) 13 September 1978, claim 1, page 2, upper left column, lines 1-5, page 2, upper right column, lines 8-13, page 3, lower left column, line 5 from the bottom to lower right column, line 6, page 3, lower right column, lines 16-20, table 1, examples, in particular, examples 1-16, 5-7, 6-8, 7-8 (Family: none) | 1, 2, 6-11<br>7, 8, 11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search repor |
|---|---|
| 19 January 2018 (19.01.2018) | 30 January 2018 (30.01.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2017/038567

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 3-9939 A (CHISSO CORP.) 17 January 1991, claims 1,2, page 2, upper left column, lines 1-4, page 3, upper right column, line 5 to lower right column, line 8, compound no. 17 in table 1, compound no. 9 in table 2, table 3 (Family: none) | 1-6, 9-11<br>5, 7, 8, 11 |
| X<br>Y | JP 58-1736 A (ADEKA ARGUS KAGAKU KABUSHIKI KAISHA) 07 January 1983, claim 1, page 2, upper left column, lines 10-15, page 2, upper right column, line 6 to lower left column, line 8, table 1, examples, in particular, examples 1-6 & US 4463113 A, claims 1-32, column 5, lines 45-68, tables in columns 6-9, examples, in particular, example 6 & EP 68326 A2 | 1-6, 9-11<br>5, 7, 8, 11 |
| X | JP 6-130727 A (NIPPON KAYAKU CO., LTD.) 13 May 1994, claim 1, paragraphs [0026], [0027], [0037], [0063] (Family: none) | 1-3, 6, 9<br>5, 7, 8, 11 |
| X | JP 2-180956 A (TEIJIN CHEMICALS LTD.) 13 July 1990, claim 1, examples 6-10 & US 5013776 A, claims 1-6, examples 6-10 & EP 342696 A2 | 1-3, 6 |
| X | JP 3-181493 A (HOECHST AG.) 07 August 1991, claim 1, example 6 & EP 432505 A2 | 1-3, 6 |
| X<br>Y | REGISTRY (STN) [online], 21 September 2004, (search date, 16 January 2018), CAS registry number: 749162-94-5 | 1-6<br>5 |
| X | REGISTRY (STN) [online], 03 September 2004, (search date, 15 January 2018), CAS registry number: 739317-52-3 | 1, 2, 6 |
| X | Inorganica Chimica Acta, 2013, vol. 400, pp. 32-41, paragraphs [0002], [0004], scheme 1 (compounds 13-20) | 1, 2, 6 |
| X | Applied Catalysis A: General, 2014, vol. 478, pp. 219-227, paragraph [0002], scheme 2 (compounds 6, 7, 13-15, 19, 20, 26-28) | 1, 2, 6 |
| X | Journal of Inorganic and Nuclear Chemistry, 1961, vol. 16, pp. 246-256, tables 1-3, 5-7 | 1, 2, 6 |
| X | Journal of the Chemical Society of Pakistan, 1984, vol. 6, no. 2, pp. 77-82, table 1, page 81 experimental | 1, 2, 6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012144671 A
- JP 2004204198 A
- JP 2014012395 A
- JP H03009939 A
- JP 2002220501 A
- JP 2006225467 A
- JP 2008516069 A
- JP 2010248438 A
- JP 2012229355 A